(19)

Europäisches Patentamt
European Patent Office
Office européen des brevets

(11) EP 2 908 531 A1

(12) EUROPEAN PATENT APPLICATION
published in accordance with Art. 153(4) EPC

(43) Date of publication:
19.08.2015 Bulletin 2015/34

(51) Int Cl.:
H04N 19/50 (2014.01)   H04N 13/02 (2006.01)

(21) Application number: 13845961.5

(22) Date of filing: 09.10.2013

(86) International application number:
PCT/JP2013/077515

(87) International publication number:
WO 2014/057988 (17.04.2014 Gazette 2014/16)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 12.10.2012 JP 2012227261

(71) Applicant: National Institute of Information and Communication Technology
Tokyo 184-8795 (JP)

(72) Inventors:
• PANAHPOUR TEHRANI, Mehrdad
Koganei-shi
Tokyo 184-8795 (JP)
• ISHIKAWA, Akio
Koganei-shi
Tokyo 184-8795 (JP)
• KAWAKITA, Masahiro
Koganei-shi
Tokyo 184-8795 (JP)
• INOUE, Naomi
Koganei-shi
Tokyo 184-8795 (JP)
• FUJII, Toshiaki
Nagoya-shi
Aichi 464-8601 (JP)

(74) Representative: Kuhnen & Wacker
Patent- und Rechtsanwaltsbüro
Prinz-Ludwig-Straße 40A
85354 Freising (DE)

(54) DEVICE, PROGRAM, AND METHOD FOR REDUCING DATA SIZE OF MULTIPLE IMAGES CONTAINING SIMILAR INFORMATION, AND DATA STRUCTURE EXPRESSING MULTIPLE IMAGES CONTAINING SIMILAR INFORMATION

(57)     Provided is a method for reducing data size of a plurality of images containing mutually similar information. The present method includes the steps of: generating a synthesized image corresponding to a target image based on a first reference image and a second reference image; generating a mask image indicating a potential error of the synthesized image with respect to the target image from the first reference image and the second reference image; generating a residual image in accordance with a difference between the target image and the synthesized image; generating a converted image corresponding to the target image by assigning, based on the mask image, a region where the potential error is relatively large, information on a corresponding region of the residual image; and outputting the first reference image, the second reference image and the converted image as information representing the target image, the first reference image and the second reference image.

FIG.6

**Description**

TECHNICAL FIELD

The present invention relates to a method, a program and an apparatus for reducing data size of a plurality of images containing mutually similar information, as well as a data structure representing a plurality of images containing mutually similar information.

BACKGROUND ART

Currently, research on various technologies for achieving ultra-realistic communication is being advanced. One of such technologies is a 3D display technology for providing high-definition 3D displays using multi-view images. Such 3D displays are achieved by parallax images obtained by capturing images of a subject from a large number of views (e.g., 200 views).

One of issues for putting such 3D displays into practical use resides in reduction of data size of multi-view images. Multi-view images contain information obtained by observing a subject from many views, resulting in increased data size. Various proposals have been made for such an issue.

For example, NPD 1 discloses a method called adaptive distributed coding of multi-view images. More specifically, this method is based on a modulo operator, and images obtained from respective views are encoded without exchanging mutual information, and in decoding, information exchange among the views is permitted.

NPD 2 and NPD 3 each disclose a method based on a residual and depths between images. These methods use one or more original views and a difference between a warped view obtained by warping the original view(s) and neighbor views. This warped view is a virtual view corresponding to the original view(s), generated from the neighbor views.

CITATION LIST

NON PATENT DOCUMENT

NPD 1: Mehrdad Panahpour Tehrani, Toshiaki Fujii, Masayuki Tanimoto, "The Adaptive Distributed Source Coding of Multi-View Images in Camera Sensor Networks", IEICE Trans, E88-A (10), 2835-2843, (2005)
NPD 2: K. Mueller, A. Smolic, K. Dix, P. Merkle, P. Kauff, T. Wiegand, "Reliability-based generation and view synthesis in layered depth video", in Proc. IEEE Intl Conf on MMSP, 34-39 (Oct. 2008)
NPD 3: M. Tanimoto, M. Wildeboer, "Frameworks for FTV coding", in Proc. PCS, and 1-4 (May 2009)
NPD 4: R. Szeliski, R. Zabih, D. Scharstein, O. Veksler, V. Kolmogorov, A. Agarwala, M. Tappen, C. Rother, "A comparative study of energy minimization methods for Markov random fields with smoothness-based priors," IEEE Trans. Pattern Anal. Machine Intell., 30(6), 1068-1080, (2008)
NPD 5: Y. Boykov, O. Veksler and R. Zabih, "Fast approximate energy minimization via graph cuts," IEEE Trans. Pattern Anal. Machine Intell., 23, 1222-1239, (Nov. 2001)
NPD 6: Y. Mori, N. Fukushima, T. Yendo, T. Fujii and M. Tanimoto, "View generation with 3D warping using depth information for FTV," Signal Process.: Image Commun., 24, 65-72, (Jan. 2009)
NPD 7: L. Yang, T. Yendo, M. Panahpour Tehrani, T. Fujii and M. Tanimoto, "Probabilistic reliability based view synthesis for FTV", in Proc. ICIP, 1785-1788, (Sep. 2010)
NPD 8: N. Fukushima, T. Fujii, Y. Ishibashi, T. Yendo and M. Tanimoto, "Real-time free viewpoint image rendering by using fast multi-pass dynamic programming," in Proc. 3DTV-CON, (June 2010)
NPD 9: A. Smolic, P. Kauff, S. Knorr, A. Hornung, M. Kunter, M. Muller, and M. Lang, "Three-Dimensional Video Postproduction and Processing", in Proc. IEEE, 99 (4), 607-625, (Apr. 2011)
NPD 10: Y. Mori, N. Fukushima, T. Fujii, and M. Tanimoto, "View generation with 3D warping using depth information for FTV," Image Communication., Vol. 24, No. 1-2(2009)

SUMMARY OF INVENTION

TECHNICAL PROBLEM

Since the method disclosed in above-described NPD 1 is mainly intended to be applied to distributed source coding, distributed video frames coding, and the like, linkage among views is not taken into consideration in an encoding process. Moreover, according to the method disclosed in NPD 1, side information is utilized in an encoding process and a decoding process, but the image quality after decoding may deteriorate because the accuracy of the side information is not very high in a region with a large difference from a value of an original view. In contrast, according to the methods disclosed in NPD 2 and NPD 3, information contained in a region with a small difference from an original view included in side information cannot be recovered appropriately.

The present invention was made to solve problems as described above, and has an object to provide a method, a program and an apparatus for reducing data size of a plurality of images containing mutually similar information more efficiently, as well as a data structure representing a plurality of images containing mutually similar information.

SOLUTION TO PROBLEM

According to an aspect of the present invention, a method for reducing data size of a plurality of images containing mutually similar information is provided. The present method includes the steps of acquiring the plurality of images, and selecting, from among the plurality of images, a target image as well as a first reference image and a second reference image similar to the target image, generating a synthesized image corresponding to the target image based on the first reference image and the second reference image, generating a mask image indicating a potential error of the synthesized image generated based on the first reference image and the second reference image, with respect to the target image, generating a residual image in accordance with a difference between the target image and the synthesized image, generating a converted image corresponding to the target image by assigning, based on the mask image, a region where the potential error is relatively large, information on a corresponding region of the residual image, and outputting the first reference image, the second reference image and the converted image as information representing the target image, the first reference image and the second reference image.

Preferably, the present method further includes the step of generating a remainder image composed of a remainder at each pixel location calculated by performing a modulo operation on an intensity value at each pixel location of the target image. The step of generating the converted image includes a step of assigning, based on the mask image, a region where the potential error is relatively small, information on a corresponding region of the remainder image.

Preferably, the step of generating the converted image includes a step of comparing a value at each pixel location of the mask image with a predetermined threshold value to distinguish between a region where the potential error is relatively large and a region where the potential error is relatively small.

Preferably, the step of generating the residual image includes a step of performing bit plane conversion on an image generated from the difference between the target image and the synthesized image.

Preferably, the present method further includes the steps of acquiring the first reference image, the second reference image and the converted image having been output, generating a synthesized image corresponding to the target image based on the first reference image and the second reference image having been acquired, generating a mask image based on the first reference image and the second reference image having been acquired, and extracting information on a region of the converted image where the potential error is relatively large based on the mask image, and determining an intensity value at a corresponding pixel location of the target image based on the extracted information and the synthesized image.

More preferably, the present method further includes the step of performing an inverse modulo operation on information on a region of the converted image where the potential error is relatively small based on the mask image, thereby determining an intensity value at a corresponding pixel location of the target image.

More preferably, in the step of determining an intensity value, bit plane conversion is performed on information on a region of the converted image where the potential error is relatively large, and an image whose bit number has been increased by the bit plane conversion and the synthesized image are added to determine the intensity value.

More preferably, the step of outputting includes a step of outputting a subsampled image of the target image. The method further includes the step of replacing a region of the target image reconstructed by the determined intensity value where a difference from an upsampled image obtained by upsampling the subsampled image is relatively large, by a corresponding value of the upsampled image.

Preferably, the step of selecting includes steps of selecting the target image as well as the first reference image and the second reference image based on a baseline distance when the plurality of images are multi-view images, and selecting the target image as well as the first reference image and the second reference image based on a frame rate when the plurality of images represent a sequence of video frames.

According to another aspect of the present invention, a program for reducing data size of a plurality of images containing mutually similar information is provided. The program causes a computer to execute the steps of acquiring the plurality of images, and selecting, from among the plurality of images, a target image as well as a first reference image and a second reference image similar to the target image, generating a synthesized image corresponding to the target image based on the first reference image and the second reference image, generating a mask image indicating a potential error of the synthesized image generated based on the first reference image and the second reference image, with respect to the target image, generating a residual image in accordance with a difference between the target image and the synthesized image, generating a converted image corresponding to the target image by assigning, based on the mask image, a region where the potential error is relatively large, information on a corresponding region of the residual image, and outputting the first reference image, the second reference image and the converted image as information representing the target image, the first reference image and the second reference image.

According to still another aspect of the present invention, an apparatus for reducing data size of a plurality of images containing mutually similar information is provided. The apparatus includes a means for acquiring the plurality of images, and selecting, from among the plurality of images, a target image as well as a first reference image and a second reference image similar to the target image, a means for generating a synthesized image corresponding to the target image based on the first reference image and the second reference image, a means for generating a mask image indicating a potential error of the synthesized image generated based on the first reference image and the second reference image, with respect to the target image, a means for generating a residual image in accordance with a difference between the target image and the synthesized image, a means for generating a converted image corresponding to the target image by assigning, based on the mask image, a region where the potential error is relatively large, information on a corresponding region of the residual image, and a means for outputting the first reference image, the second reference image and the converted image as information representing the target image, the first reference image and the second reference image.

According to yet another aspect of the present invention, a data structure representing a plurality of images containing mutually similar information is provided. The data structure includes a converted image corresponding to a target image contained in the plurality of images, and a first reference image and a second reference image similar to the target image. The converted image is obtained by assigning a region of a synthesized image generated based on the first reference image and the second reference image where a potential error with respect to the target image is relatively large, information on a corresponding region of a residual image in accordance with a difference between the target image and the synthesized image.

ADVANTAGEOUS EFFECTS OF INVENTION

According to the present invention, data size of a plurality of images containing mutually similar information can be reduced more efficiently.

BRIEF DESCRIPTION OF DRAWINGS

Fig. 1 is a diagram showing a 3D displays reproduction system 1 to which a data size reduction method according to an embodiment is applied.

Fig. 2 shows schematic views of an example of a plurality of images (multi-view images) containing mutually similar information according to the present embodiment.

Fig. 3 shows schematic views of an example of a plurality of images (a sequence of video frames) containing mutually similar information according to the present embodiment.

Fig. 4 is a schematic view showing a hardware configuration of an information processing apparatus functioning as an encoder shown in Fig. 1.

Fig. 5 is a schematic view showing a hardware configuration of an information processing apparatus functioning as a decoder shown in Fig. 1.

Fig. 6 is a flow chart showing an overall procedure of the data size reduction method according to the present embodiment.

Fig. 7 is a block diagram showing a functional configuration related to an encoding process by the data size reduction method according to the present embodiment.

Fig. 8 is a diagram showing a result of processing of generating a synthesized image by the data size reduction method according to the present embodiment.

Fig. 9 is a schematic view for illustrating processing of generating a mask image by the data size reduction method according to the present embodiment.

Fig. 10 is a diagram showing a result of the processing of generating a mask image by the data size reduction method according to the present embodiment.

Fig. 11 is a schematic view for illustrating processing of generating a residual image by the data size reduction method according to the present embodiment.

Fig. 12 is a diagram showing a result of the processing of generating the residual image by the data size reduction method according to the present embodiment.

Fig. 13 is a block diagram showing a more detailed functional configuration of a remainder image generation unit shown in Fig. 7.

Fig. 14 is a schematic view for illustrating processing of calculating error distribution used for selecting side information by the data size reduction method according to the present embodiment.

Fig. 15 shows diagrams of an example of a Lookup table used for generating a remainder image according to the present embodiment.

Fig. 16 is a diagram showing a result of processing of generating a remainder image according to the present embodiment.

Fig. 17 is a diagram showing a result of processing of generating a hybrid image according to the present embodiment.

Fig. 18 is a diagram showing a result of processing of generating a hybrid image according to the present embodiment.

Fig. 19 shows an example of a target image input in a decoding process by the data size reduction method according to the present embodiment.

Fig. 20 shows an example of a residual image generated from the target image shown in Fig. 19.

Fig. 21 shows an example of a remainder image generated from the target image shown in Fig. 19.

Fig. 22 shows an example of a mask image generated from the target image shown in Fig. 19.

Fig. 23 shows an example of a hybrid image generated from the target image shown in Fig. 19.

Fig. 24 is a block diagram showing a functional configuration related to the decoding process by the data size reduction method according to the present embodiment.

Fig. 25 is a schematic view for illustrating the overview of the decoding process by the data size reduction method according to the present embodiment.

Fig. 26 is a schematic view for illustrating processing of generating a reconstructed image by the data size reduction method according to the present embodiment.

Fig. 27 is a block diagram showing a more detailed functional configuration of a remainder image generation unit shown in Fig. 24.

Fig. 28 shows an example of a remainder image generated by a data size reduction method according to Variation 3 of the present embodiment.

Fig. 29 shows an example of a residual image generated by a data size reduction method according to Variation 4 of the present embodiment.

## DESCRIPTION OF EMBODIMENTS

An embodiment of the present invention will be described in detail with reference to the drawings. It is noted that, in the drawings, the same or corresponding portions have the same reference characters allotted, and detailed description thereof will not be repeated.

[A. Application Example]

First, a typical application example will be described for easy understanding of a data size reduction method according to the present embodiment. It is noted that the application range of the data size reduction method according to the present embodiment is not limited to a structure which will be described below, but can be applied to any structure.

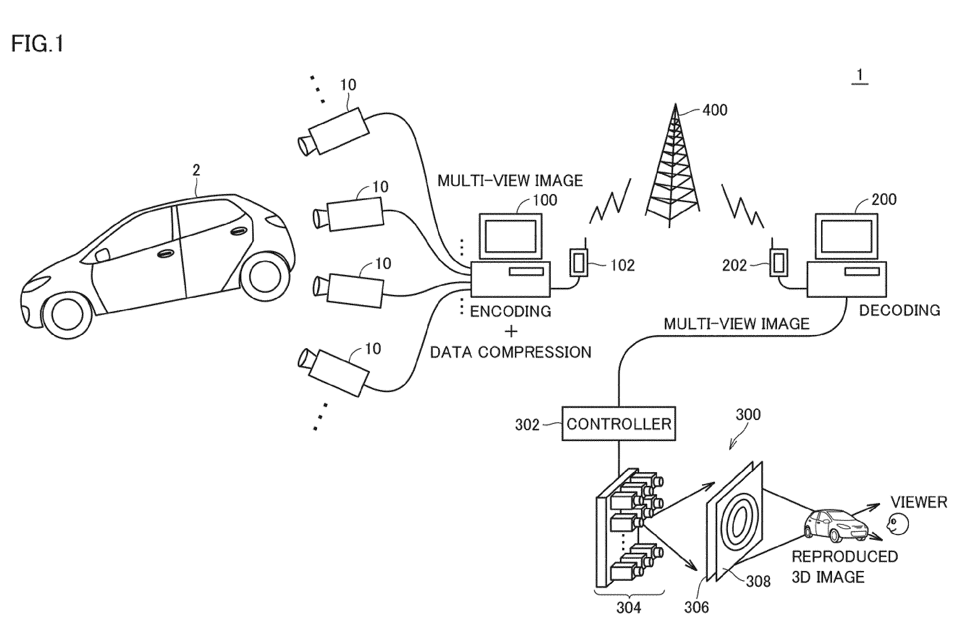

Fig. 1 is a diagram showing 3D displays reproduction system 1 to which the data size reduction method according to the present embodiment is applied. Referring to Fig. 1, in 3D displays reproduction system 1, images of a subject 2 are captured with a plurality of cameras 10 (camera array) from a plurality of views different from one another, thereby generating multi-view images, and 3D displays are displayed by a 3D display device 300 using these generated multi-view images.

More specifically, 3D displays reproduction system 1 includes an information processing apparatus 100 functioning as an encoder to which respective images (parallax images) are input from plurality of cameras 10, and an information processing apparatus 200 functioning as a decoder which decodes data transmitted from information processing apparatus 100 and outputs multi-view images to 3D display device 300. Information processing apparatus 100 performs a data compression process which will be described later along with an encoding process, thereby generating data suitable for storage and/or transmission. As an example, information processing apparatus 100 wirelessly transmits data (compressed data) containing information on the generated multi-view images using a wireless transmission device 102 connected thereto. This wirelessly transmitted data is received by a wireless transmission device 202 connected to information processing apparatus 200 through a wireless base station 400 and the like.

3D display device 300 includes a display screen mainly composed of a diffusion film 306 and a condenser lens 308, a projector array 304 which projects multi-view images on the display screen, and a controller 302 for controlling images to be projected by respective projectors of projector array 304. Controller 302 causes a corresponding projector to project each parallax image contained in multi-view images output from information processing apparatus 200.

With such an apparatus structure, a viewer who is in front of the display screen is provided with a reproduced 3D display of subject 2. At this time, a parallax image entering a viewer's view is intended to be changed depending on the relative positions of the display screen and the viewer, giving the viewer an experience as if he/she is in front of subject 2.

Such 3D displays reproduction system 1 is expected to be used for general applications in a movie theater, an amusement facility and the like, and to be used for industrial applications as a remote medical system, an industrial design system and an electronic advertisement system for public viewing or the like.

[B. Overview]

Considering multi-view images, moving pictures or the like generated by capturing images of subject 2 with the camera array as shown in Fig. 1, they may contain redundant information among images constituting them. By the data size reduction method according to the present embodiment, such redundant information is taken into consideration, and data with such redundant information removed therefrom is generated. That is, the data size reduction method according to the present embodiment and the data structure used therein are intended to reduce data size of a plurality of images containing mutually similar information.

The data size reduction method according to the present embodiment and the data structure used therein can be applied to multi-view data representation as described above, and can also be applied to distributed source coding. Alternatively, the data size reduction method according to the present embodiment and the data structure used therein can be applied to video frames representation, and can also be applied to distributed video frames coding. It is noted that the data size reduction method according to the present embodiment may be used alone or as part of pre-processing before data transmission.

Assuming multi-view images captured with the camera array as shown in Fig. 1, some of the images remain unchanged, while some other images are converted into images from which redundant information has been removed by the encoder (hybrid images which will be described later). In the case of using all the captured images, depth maps for images to remain unchanged are acquired (estimated).

The unchanged image and the depth map are used to synthesize (estimate) a virtual view at the location of an image to be converted into a hybrid image. The depth map can also be utilized in a decoding process (a process of reconverting a converted image/ a process of returning a converted image to original image form). In the reconversion process, the depth map for an unchanged image may be reconstructed using that unchanged image.

A converted image is generated by assigning of information on a corresponding region of a residual image based on a mask image indicating a potential error, with respect to an image to be converted, of an image synthesized from an unchanged image and a depth map. More specifically, a converted image is generated by assigning a region of the synthesized image where a potential error with respect to a target image is relatively large, information on a corresponding region of a residual image. Typically, a mask image is generated before image conversion.

Furthermore, in a converted image, it may assign a region to which the residual image has not been assigned, information on a corresponding region of a remainder image. That is, a converted image may be generated by combining the intensity value of a remainder image and the intensity value of a residual image in accordance with a mask image.

In this way, a converted image according to the present embodiment, which may be formed by combining a plurality of pieces of information, will be called a "hybrid image" in the following description for the sake of convenience.

A residual image is generated based on a target image and a virtual image.

A remainder image is generated using side information which is information on a virtual view at the location of an image to be converted. When input images are multi-view images, a synthesized virtual image (virtual view) is used as side information. Alternatively, a virtual image may be synthesized using an unchanged image and a depth map, and this synthesized image may be used as side information. When generating a remainder image from side information, a gradient image is generated. The value of each gradient is an integer value, and a modulo operation or an inverse modulo operation is executed using this integer value.

It is noted that a target image itself to be converted into a hybrid image may be used as side information. In this case, a synthesized virtual image and/or a subsampled image of a target image will be used as side information because the target image cannot be used as it is in a decoding process.

On the other hand, if input images represent a sequence of video frames, a frame interpolated or extrapolated between frames can be used as side information.

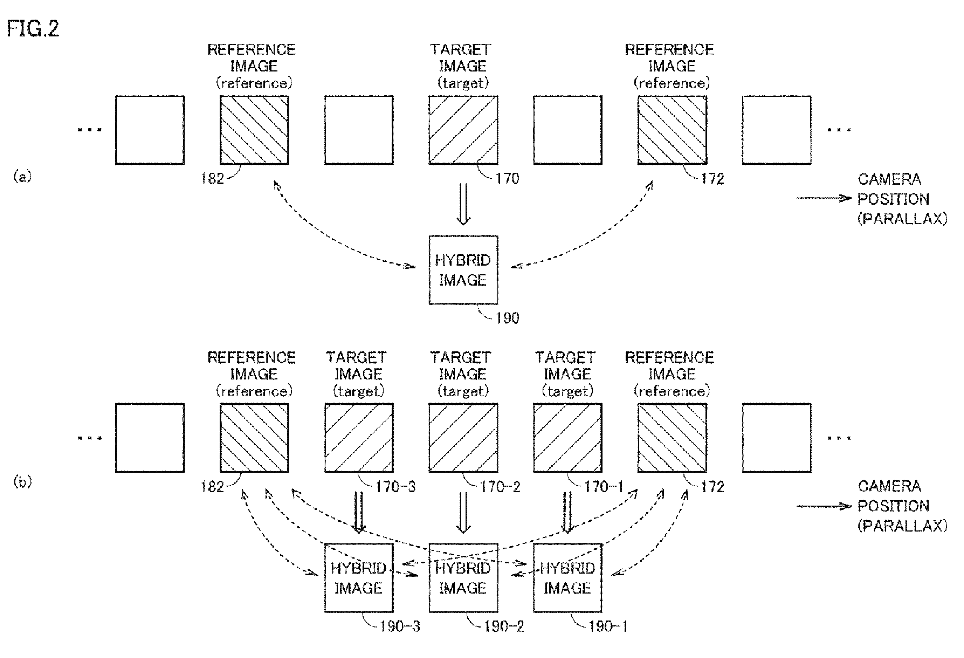

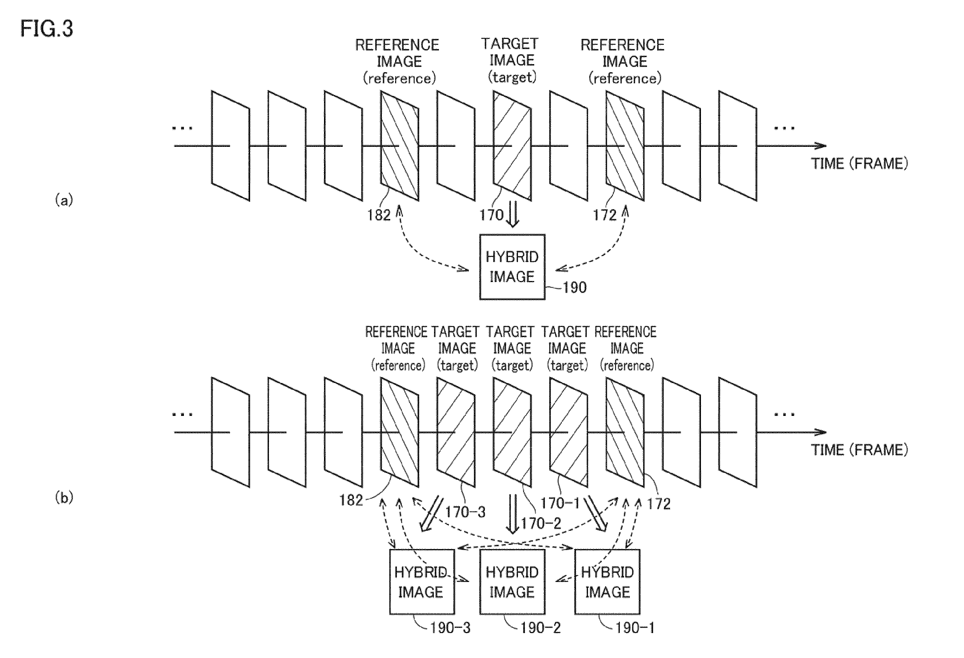

Figs. 2 and 3 are schematic views each showing an example of a plurality of images containing mutually similar information according to the present embodiment. Referring to Fig. 2(a), by capturing images of a subject using a plurality of cameras (camera array) arranged in proximity to one another as shown in Fig. 1, for example, a group of parallax images each having a parallax depending on the position of a corresponding camera is generated. Paying attention to a certain target image 170 in the group of parallax images, a view thereof (i.e. target view) in many cases at least partially overlaps views of other images captured with cameras at proximate camera positions (i.e. reference view(s)) (hereinafter also referred to as "reference image" or "reference images"). With such overlap among views, redundant information exists between target image 170 and reference images 172, 182. Conversely, under such circumstances, information contained in target image 170 can be reconstructed from information contained in reference images 172, 182 and some additional information.

By the data size reduction method according to the present embodiment, a hybrid image 190 with which information on target image 170 can be reconstructed from information on proximate reference images 172 and 182 is generated, and this hybrid image 190 is output instead of target image 170. Basically, hybrid image 190 interpolates information, in information possessed by target image 170, that is lacking with information contained in reference images 172 and 182, and redundancy can be eliminated as compared with the case of outputting target image 170 as it is. Therefore, data size can be reduced as compared with the case of outputting target image 170 and reference images 172, 182 as they are.

As will be described later, target image 170 and reference images 172, 182 can be selected at any intervals as long as they contain mutually similar information. For example, as shown in Fig. 2(b), hybrid images 190-1, 190-2 and 190-3 may be generated for target images 170-1, 170-2 and 170-3, respectively, with respect to identical reference images 172 and 182. That is, one or more target images can be converted into hybrid images with respect to a pair of reference images.

As shown in Fig. 3(a), a similar logic can be applied to a sequence of video frames. That is, since a frame period of a normal moving picture is sufficiently short, if proximate frames are selected appropriately, information contained therein may partly overlap each other. Therefore, by assuming an image of a certain frame as target image 170 and generating hybrid image 190 with reference to reference images 172 and 182 in proximate frames, data size can be reduced.

Target image 170 and reference images 172, 182 can also be selected at any frame intervals similarly for a sequence of video frames as long as they contain mutually similar information. For example, as shown in Fig. 3(b), hybrid images 190-1, 190-2 and 190-3 may be generated for target images 170-1, 170-2 and 170-3, respectively, with respect to identical reference images 172 and 182. That is, one or more target images can be converted into hybrid images with respect to a pair of reference images.

The data size reduction method according to the present embodiment may be used alone or as part of pre-processing before data transmission.

It is noted that "image capturing" in the present specification may include processing of arranging some object on a virtual space and rendering an image from a view optionally set for this arranged object (that is, virtual image capturing on a virtual space) as in computer graphics, for example, in addition to processing of acquiring an image of a subject with a real camera.

In the present embodiment, cameras can be optionally arranged in the camera array for capturing images of a subject. For example, any arrangement, such as one-dimensional arrangement (where cameras are arranged on a straight line), two-dimensional arrangement (where cameras are arranged in a matrix form), circular arrangement (where cameras are arranged entirely or partially on the circumference), spiral arrangement (where cameras are arranged spirally), and random arrangement (where cameras are arranged without any rule), can be adopted.

[C. Hardware Configuration]

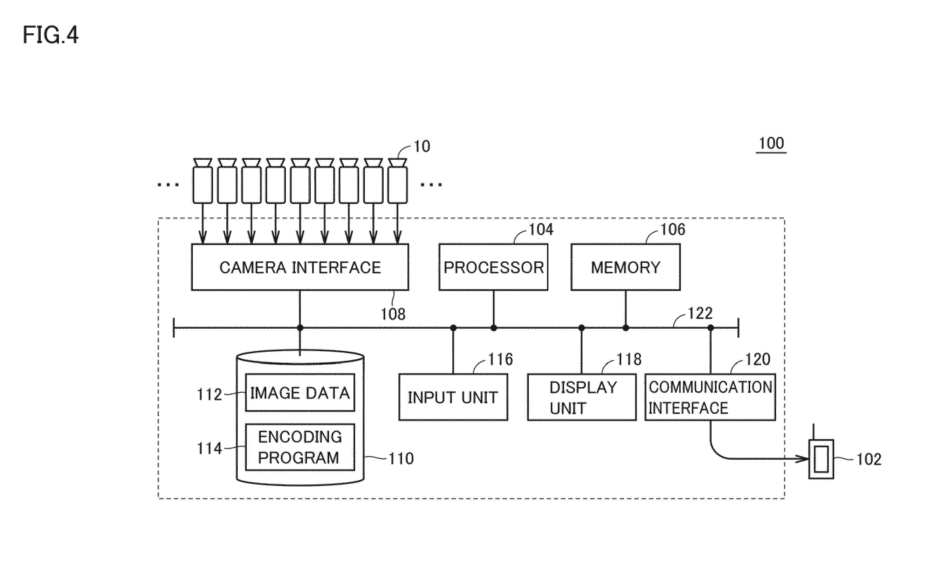

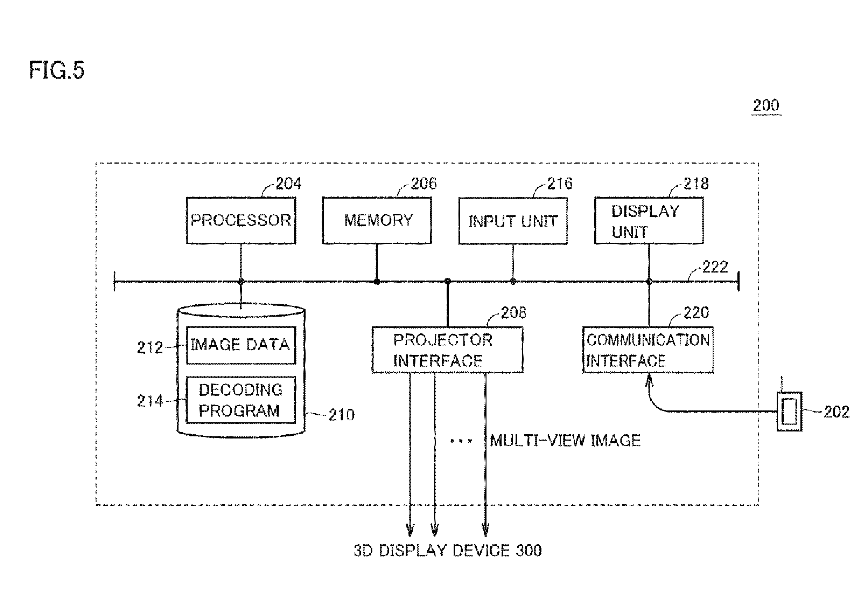

Next, an exemplary configuration of hardware for achieving the data size reduction method according to the present embodiment will be described. Fig. 4 is a schematic view showing a hardware configuration of information processing apparatus 100 functioning as an encoder shown in Fig. 1. Fig. 5 is a schematic view showing a hardware configuration of information processing apparatus 200 functioning as a decoder shown in Fig. 1.

Referring to Fig. 4, information processing apparatus 100 includes a processor 104, a memory 106, a camera interface 108, a hard disk 110, an input unit 116, a display unit 118, and a communication interface 120. These respective components are configured to be capable of making data communications with one another through a bus 122.

Processor 104 reads a program stored in hard disk 110 or the like, and expands the program in memory 106 for execution, thereby achieving the encoding process according to the present embodiment. Memory 106 functions as a working memory for processor 104 to execute processing.

Camera interface 108 is connected to plurality of cameras 10, and acquires images captured by respective cameras 10. The acquired images may be stored in hard disk 110 or memory 106. Hard disk 110 holds, in a nonvolatile manner, image data 112 containing the acquired images and an encoding program 114 for achieving the encoding process and data compression process. The encoding process which will be described later is achieved by processor 104 reading and executing encoding program 114.

Input unit 116 typically includes a mouse, a keyboard and the like to accept user operations. Display unit 118 informs a user of a result of processing and the like.

Communication interface 120 is connected to wireless transmission device 102 and the like, and outputs data output as a result of processing executed by processor 104, to wireless transmission device 102.

Referring to Fig. 5, information processing apparatus 200 includes a processor 204, a memory 206, a projector interface 208, a hard disk 210, an input unit 216, a display unit 218, and a communication interface 220. These respective components are configured to be capable of making data communications with one another through a bus 222.

Processor 204, memory 206, input unit 216, and display unit 218 are similar to processor 104, memory 106, input unit 116, and display unit 118 shown in Fig. 4, respectively, and therefore, a detailed description thereof will not be repeated.

Projector interface 208 is connected to 3D display device 300 to output multi-view images decoded by processor 204 to 3D display device 300.

Communication interface 220 is connected to wireless transmission device 202 and the like to receive image data transmitted from information processing apparatus 100 and output the image data to processor 204.

Hard disk 210 holds, in a nonvolatile manner, image data 212 containing decoded images and a decoding program 214 for achieving a decoding process. The decoding process which will be described later is achieved by processor 204 reading and executing decoding program 214.

The hardware itself and its operation principle of each of information processing apparatuses 100 and 200 shown in Figs. 4 and 5 are common. The essential part for achieving the encoding process/decoding process according to the present embodiment is software (instruction codes), such as encoding program 114 and decoding program 214 stored in storage media such as a hard disk, or the like. Encoding program 114 and/or decoding program 214 may be implemented such that processing is executed using modules offered by OS (Operating System). In this case, encoding program 114 and/or decoding program 214 will not include some modules. Such a case, however, is also included in the technical scope of the invention of the present application.

All or some of functions of information processing apparatus 100 and/or information processing apparatus 200 may be implemented by using a dedicated integrated circuit such as ASIC (Application Specific Integrated Circuit) or may be implemented by using programmable hardware such as FPGA (Field-Programmable Gate Array) or DSP (Digital Signal Processor).

In a data server for managing images, for example, a single information processing apparatus will execute the encoding process and decoding process, as will be described later.

[D. Overall Procedure]

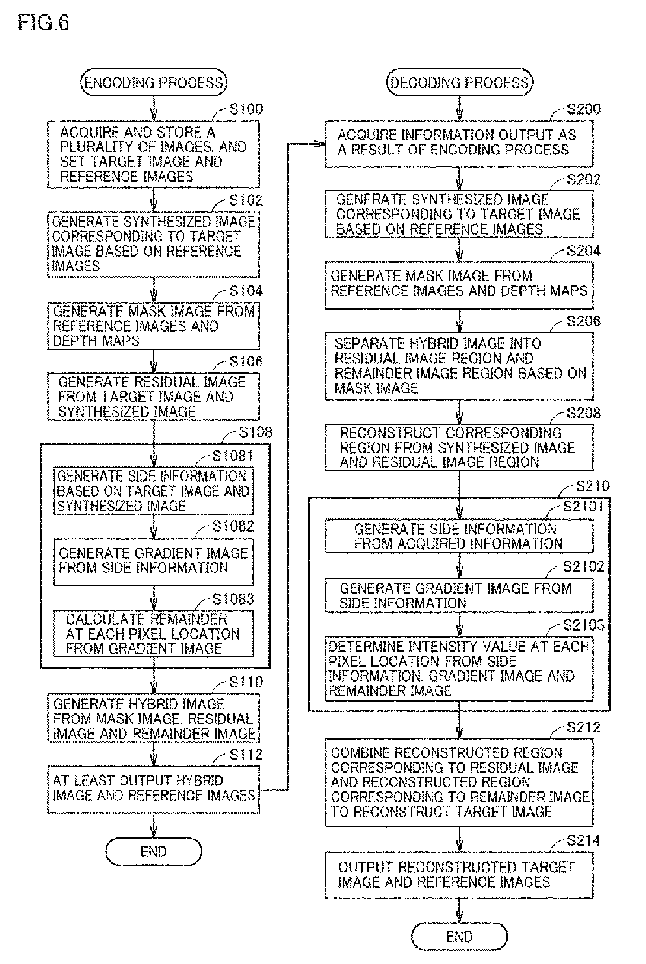

Next, an overall procedure of the data size reduction method according to the present embodiment will be described. Fig. 6 is a flow chart showing an overall procedure of the data size reduction method according to the present embodiment. The data size reduction method shown in Fig. 6 is mainly composed of an encoding process, but practically involves a decoding process for reconstructing original views from encoded data. In 3D displays reproduction system 1 as shown in Fig. 1, an encoding process and a decoding process are executed by different information processing apparatuses, respectively. On the other hand, in a server system for storing images, for example, a single information processing apparatus will execute an encoding process and a decoding process. That is, an encoding process is executed as pre-processing before data storage, and a decoding process is executed at the time of data reconstruction. In any case, processing in each step is typically achieved by the processor executing a program.

Referring to Fig. 6, processing in steps S100 to S 112 is executed as an encoding process. Specifically, processor 104 acquires a plurality of images containing mutually similar information and storing the acquired images in a predetermined storage area, and sets one of the acquired plurality of images as a target image and sets at least two images similar to the target image as reference images (step S100). That is, processor 104 acquires the plurality of images containing mutually similar information, and selects a target image and two reference images similar to the target image from among the plurality of images.

Subsequently, processor 104 generates a synthesized image corresponding to the target image based on the set two reference images (step S102), and generates a mask image from the two reference images and their depth maps (step S104). This mask image indicates a potential error of the synthesized image generated based on the two reference images, with respect to the target image.

Subsequently, processor 104 generates a residual image from the target image and the synthesized image (step S106). The residual image is an image in accordance with a difference between the target image and the synthesized image.

Processor 104 also generates a remainder image from the target image, the synthesized image and the like (step S108). More specifically, in the processing of generating a remainder image in step S108, processor 104 generates side information based on part or all of the target image and the synthesized image (step S1081). The side information is information on a virtual view at the location of the target image, and contains information necessary for reconstructing the target image from the remainder image and the reference images. Subsequently, processor 104 generates a gradient image from the generated side information (step S1082). Then, processor 104 calculates a remainder at each pixel location from the generated gradient image (step S1083).

Subsequently, processor 104 generates a hybrid image from the mask image, the residual image and the remainder image (step S110). Finally, processor 104 at least outputs the hybrid image and the reference images as information corresponding to the target image and the reference images (step S112). That is, processor 104 outputs the two reference images and the hybrid image as information representing the target image and the two reference images.

As a decoding process, processing in steps S200 to S214 is executed. Specifically, processor 204 acquires information output as a result of the encoding process (step S200). That is, processor 204 at least acquires the two reference images and the hybrid image having been output.

Subsequently, processor 204 generates a synthesized image corresponding to the target image based on the reference images contained in the acquired information (step S202), and generates a mask image from the two reference images and their depth maps (step S204).

Subsequently, processor 204 separates the hybrid image into a residual image region and a remainder image region based on the generated mask image (step S206). Then, processor 204 reconstructs a corresponding region of the target image from the synthesized image and the separated residual image region (step S208), and reconstructs a corresponding region of the target image from the synthesized image and the separated remainder image region (step S210).

More specifically, in the processing in step S210 of reconstructing a region corresponding to the remainder image, processor 204 generates side information from the acquired information (step S2101). Subsequently, processor 204 generates a gradient image from the generated side information (step S2102). Then, processor 204 determines an intensity value at each pixel location of the target image from the side information, the gradient image and the remainder image (step S2103).

Finally, processor 204 combines the reconstructed region corresponding to the residual image and the reconstructed region corresponding to the remainder image to reconstruct the target image (step S212), and outputs the reconstructed target image and the reference images (step S214).

[E. Encoding Process]

Next, the encoding process (steps S100 to S112 in Fig. 6) by the data size reduction method according to the present embodiment will be described in detail.

<<e1: Functional Configuration>>

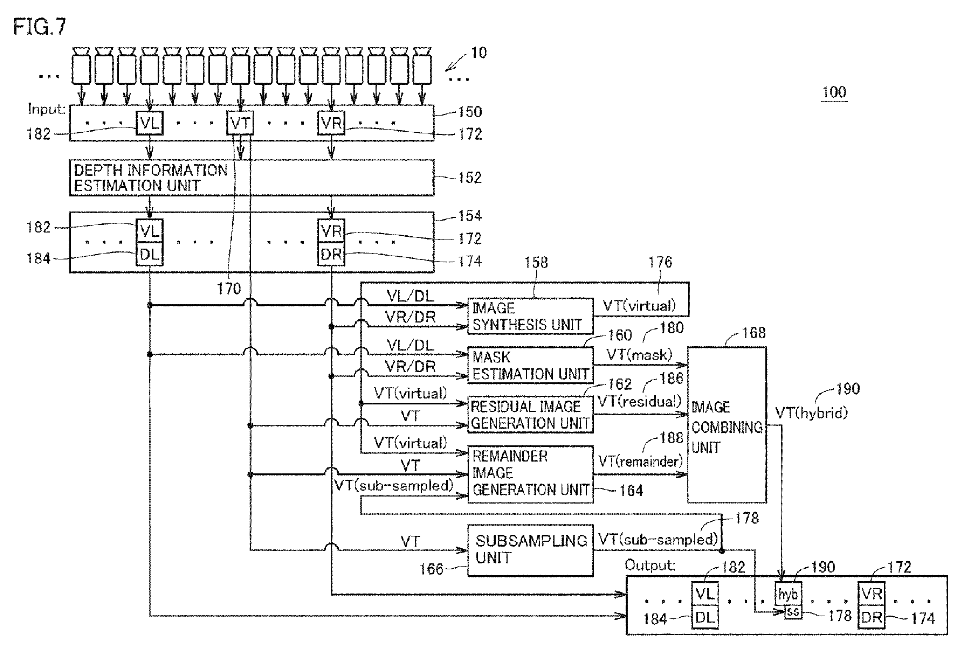

Fig. 7 is a block diagram showing a functional configuration related to the encoding process by the data size reduction method according to the present embodiment. Referring to Fig. 7, information processing apparatus 100 includes, as its functional configuration, an input image buffer 150, a depth information estimation unit 152, a depth information buffer 154, an image synthesis unit 158, a mask estimation unit 160, a residual image generation unit 162, a remainder image generation unit 164, a subsampling unit 166, and an image combining unit 168.

«e2: Acquisition of Input Image and Depth Map»

Image acquisition processing shown in step S100 of Fig. 6 is implemented by input image buffer 150, depth information estimation unit 152 and depth information buffer 154 shown in Fig. 7. Specifically, information processing apparatus 100 receives multi-view images composed of a plurality of parallax images captured with plurality of cameras 10 (camera array), and stores them in input image buffer 150. Alternatively, information processing apparatus 100 may receive a sequential video composed of images arranged in the order of frames for storage in input image buffer 150. These input images will be subjected to processing. Although the description herein is given paying attention to the set of single target image 170 and two reference images 172, 182 for ease of description, the data size reduction method according to the present embodiment may be applied to any number of sets depending on the reduction rate of data size as required, throughput of information processing apparatus 100 or the like.

Target image 170 and reference images 172, 182 must contain mutually similar information. Therefore, in the case of multi-view images, target image 170 and reference images 172, 182 are preferably selected based on their baseline distance. That is, target image 170 and reference images 172, 182 are selected in accordance with parallaxes produced therebetween. In the case of a sequence of video frames (moving picture), frames to be a target are selected based on the frame rate. That is, the processing in step S100 of Fig. 6 includes processing of selecting target image 170 and reference images 172, 182 based on the baseline distance in the case where the plurality of images are multi-view images (see Fig. 2) and processing of selecting target image 170 and reference images 172, 182 based on the frame rate in the case where the plurality of images represent a sequence of video frames (see Fig. 3).

In Fig. 7, target image 170 is denoted as "VT" referring to a target view represented by target image 170 (target view for representation). Reference image 172 located at the right side of target image 170 is denoted as "VR" referring to an original view at the right side of target image 170 (original view at the right side of VT). Reference image 182 located at the left side of target image 170 is denoted as "VL" referring to an original view at the left side of target image 170 (original view at the left side of VT). It is noted that the expressions of the right side and the left side are used for the sake of description, and may not always conform to those in a real camera arrangement.

By the data size reduction method according to the present embodiment, a synthesized image 176 corresponding to the target image may be generated using depth maps of reference images 172 and 182, as will be described later. Therefore, a depth map 174 of reference image 172 and a depth map 184 of reference image 182 are acquired or estimated using any method.

For example, in the case of using a camera array as shown in Fig. 1, it may be possible to acquire depth maps simultaneously with acquisition of an image representing a subject. Considering the processing of reconstructing target image 170 in an encoding process, it is preferable that a view is unchanged between a reference image and a corresponding depth map. Therefore, it is preferable to acquire each depth map using such a camera array, if possible. In this case, a reference image and a corresponding depth map are simultaneously input to the information processing apparatus. Therefore, if a depth map corresponding to a reference image can be acquired, it is not always necessary to mount depth information estimation unit 152 shown in Fig. 7.

In Fig. 7, depth map 174 corresponding to reference image 172 is denoted as "DR" referring to a depth map at that location (depth map at the location of VR). Depth map 184 corresponding to reference image 182 is denoted as "DL" referring to a depth map at that location (depth map at the location of VL).

In the case where the input plurality of images are multi-view images, and when a depth map for a view cannot be used or when a distance camera cannot be used, depth information estimation unit 152 generates depth maps 174 and 184 corresponding to reference images 172 and 182, respectively. As a method for estimating a depth map by depth information estimation unit 152, various methods based on stereo matching with which energy optimization as disclosed in NPD 4 is used together can be adopted. For example, optimization can be done using graph cuts as disclosed in NPD 5.

Depth maps 174 and 184 generated by depth information estimation unit 152 are stored in depth information buffer 154.

It is noted that when the input plurality of images represent a sequence of video frames (moving picture), it is not always necessary to acquire depth maps.

The following description will mainly illustrate a case where one set of input data contains target image 170, reference image 172 and corresponding depth map 174 as well as reference image 182 and corresponding depth map 184, as a typical example.

«e3: Generation of Synthesized Image»

The processing of generating a synthesized image shown in step S102 of Fig. 6 is implemented by image synthesis unit 158 shown in Fig. 7. More specifically, image synthesis unit 158 generates synthesized image 176 indicating a virtual view at the location of target image 170 using reference image 172 and corresponding depth map 174 as well as reference image 182 and corresponding depth map 184. In Fig. 7, this synthesized image 176 is denoted as "VT (virtual)" referring to a virtual view of a target view. For such image synthesis, methods as disclosed in NPD 6 and NPD 7 can be adopted, for example. In the case where the accuracy of a depth map is low, synthesized image 176 can be generated by using interpolation processing as disclosed in NPD 8 and NPD 9.

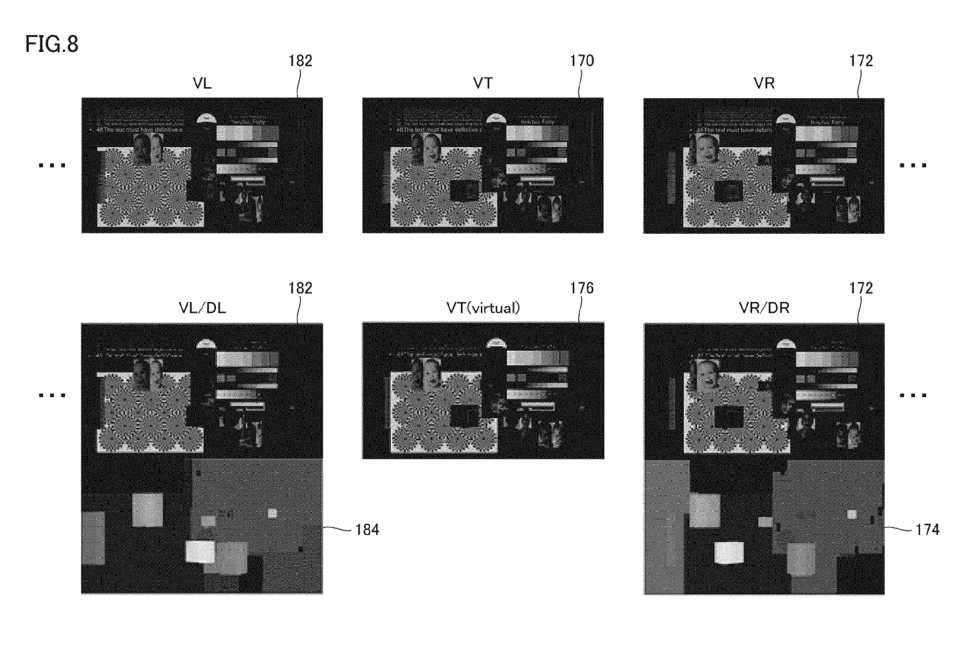

Fig. 8 is a diagram showing a result of processing of generating a synthesized image by the data size reduction method according to the present embodiment. As shown in Fig. 8, synthesized image 176 corresponding to target image 170 is generated from reference image 172 and corresponding depth map 174 as well as reference image 182 and corresponding depth map 184.

When the input plurality of images represent a sequence of video frames (moving picture), interpolation processing or extrapolation processing is performed based on information on frames corresponding to two reference images 172 and 182, thereby generating information on a frame corresponding to target image 170, which can be used as synthesized image 176.

«e4: Generation of Mask Image»

The processing of generating a mask image shown in step S104 of Fig. 6 is implemented by mask estimation unit 160 shown in Fig. 7. More specifically, mask estimation unit 160 generates a mask image 180 indicating a potential error of synthesized image 176 with respect to target image 170, using reference image 172 and corresponding depth map 174 as well as reference image 182 and corresponding depth map 184. Mask image 180 is composed of two regions. These regions respectively correspond to two regions, one with a relatively large error and the other with a relatively small error.

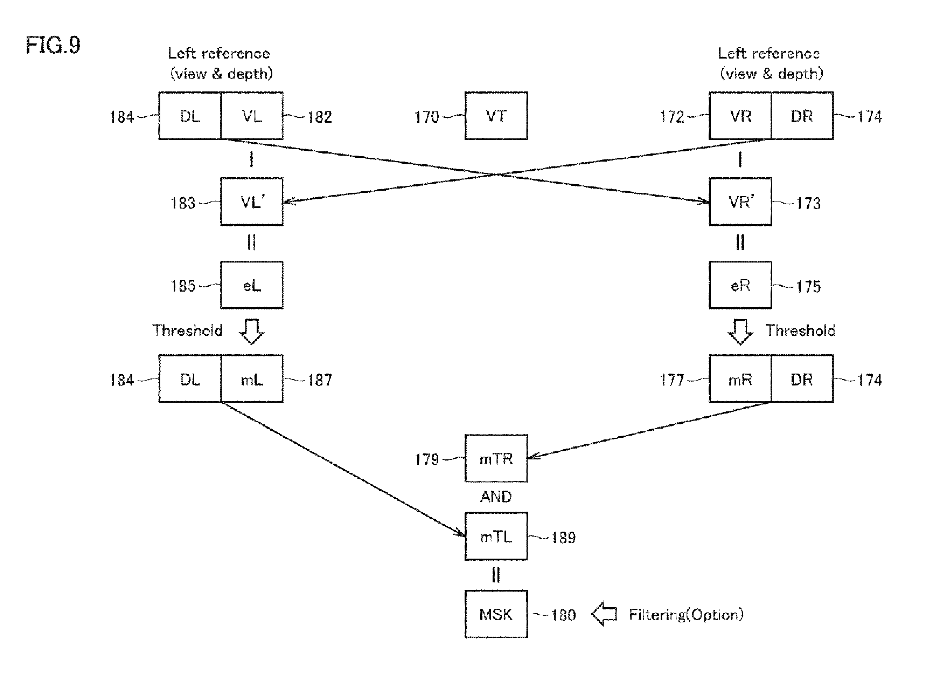

Fig. 9 is a schematic view for illustrating processing of generating mask image 180 by the data size reduction method according to the present embodiment. Referring to Fig. 9, mask estimation unit 160 subjects reference image 172 located at the right side of target image 170 and reference image 182 located at the left side of target image 170 to 3D warping into each other's image location using their depth maps 174 and 184, thereby generating respective transformed images. For the details of 3D warping, see NPD 9, for example. That is, mask estimation unit 160 subjects reference image 172 to 3D warping using depth map 174 thereof, thereby generating a transformed image 183 (denoted as "VL'") corresponding to a virtual view of reference image 182. Mask estimation unit 160 also subjects reference image 182 to 3D warping using depth map 184 thereof, thereby generating a transformed image 173 (denoted as "VR'") corresponding to a virtual view of reference image 172.

Subsequently, mask estimation unit 160 calculates the intensity difference (absolute value) between a projected pixel location of the transformed image and a pixel location of a corresponding reference image. That is, mask estimation unit 160 calculates the intensity difference (absolute value) between transformed image 173 and reference image 172 for the respective corresponding pixel locations, thereby generating an error image 175 (denoted as "eR"). Similarly, mask estimation unit 160 calculates the intensity difference (absolute value) between transformed image 183 and reference image 182 for the respective corresponding pixel locations, thereby generating an error image 185 (denoted as "eL"). Error images 175 and 185 indicate estimate values of errors for the right-side and left-side reference images (reference images 172 and 184), respectively.

Subsequently, binarizing processing is executed on error images 175 and 185. That is, mask estimation unit 160 compares the intensity value at each pixel location of error images 175 and 185 with a threshold value to distinguish between a region where the intensity value is lower than a preset threshold value and a region where the intensity value is higher than the preset threshold value. As a result, binarized error images 177 and 187 having either "0" for a pixel in a region where the intensity value is lower than the threshold value or another integer value (typically, "1") are generated from error images 175 and 185, respectively.

Furthermore, mask estimation unit 160 subjects binarized error images 177 and 187 to 3D warping into the location of target image 170 using respectively corresponding depth maps 174 and 184, thereby generating binarized error transformed images 179 and 189. Ultimately, mask estimation unit 160 generates mask image 180, representing an estimate value of the error with respect to target image 170, in which binarized error transformed image 179 and binarized error transformed image 189 are integrated. More specifically, mask estimation unit 160 obtains a logical product for respective pixel locations between binarized error transformed image 179 and binarized error transformed image 189, thereby calculating mask image 180.

It is noted that calculated mask image 180 may be subjected to a filtering process. A noise component contained in the calculated mask image can be reduced by the filtering process. For such a filtering process, various methods, such as Gaussian, Median, and morphological operations (e.g., dilation, erosion, etc.), can be adopted.

In this mask image 180, a region with a small error between reference images is indicated by "0", and a region with a large error between reference images is indicated by another integer value (e.g., "1"). In this way, the processing of generating a mask image shown in step S104 of Fig. 6 includes processing of comparing the value at each pixel location of mask image 180 with a predetermined threshold value, thereby distinguishing between a region with a relatively large potential error and a region with a relatively small potential error.

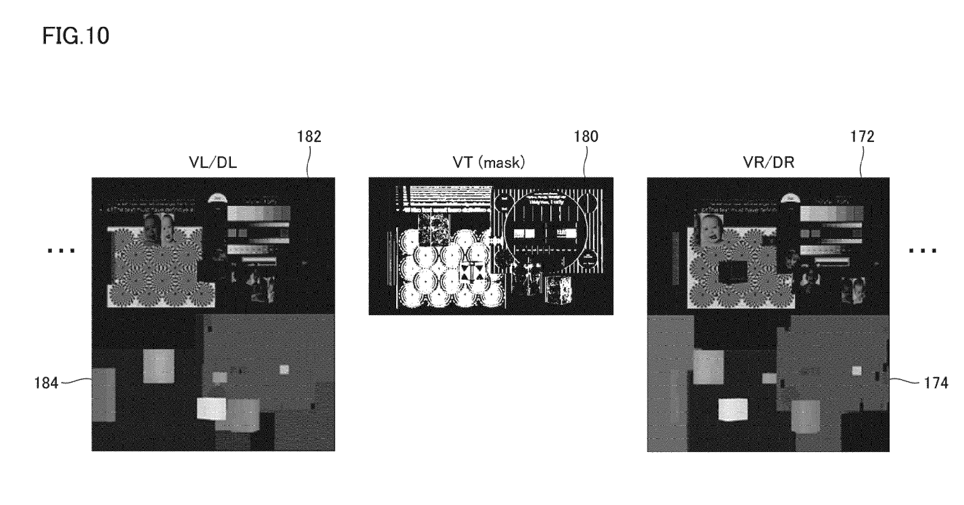

Fig. 10 is a diagram showing a result of the processing of generating mask image 180 by the data size reduction method according to the present embodiment. As shown in Fig. 10, mask image 180 corresponding to target image 170 is generated from reference image 172 and corresponding depth map 174 as well as reference image 182 and corresponding depth map 184.

It is noted that for the processing of generating mask image 180 shown in Fig. 9, a processing example of generating binarized error images 177 and 187 by performing thresholding on error images 175 and 185 is illustrated, however, this thresholding may be performed immediately before generation of mask image 180. That is, mask image 180 may be generated by subjecting error images 175 and 185 to 3D warping using depth maps 174 and 184, respectively, and performing thresholding on an image obtained by combining the 3D warped images.

«e5: Generation of Residual Image»

The processing of generating a residual image shown in step S106 of Fig. 6 is implemented by residual image generation unit 162 shown in Fig. 7. More specifically, residual image generation unit 162 calculates the difference in intensity value between corresponding pixels of target image 170 and synthesized image 176, thereby generating a residual image 186. Residual image 186 contains synthesis error information about how much error synthesized image 176 has with respect to target image 170. Residual image 186 is denoted as "VT (residual)" referring to a residual.

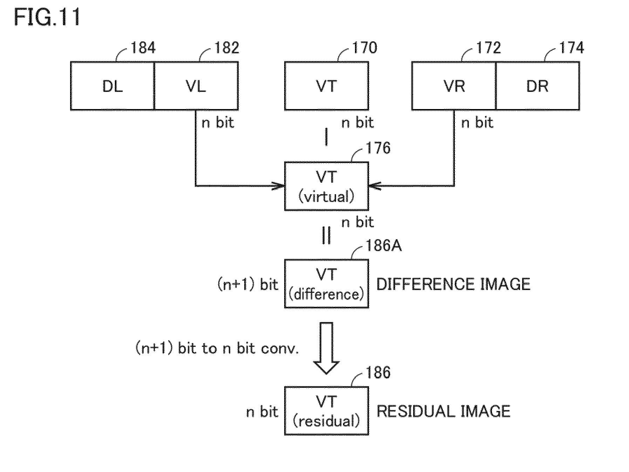

Fig. 11 is a schematic view for illustrating processing of generating residual image 186 by the data size reduction method according to the present embodiment. Referring to Fig. 11, residual image generation unit 162 calculates the difference in intensity value between target image 170 and synthesized image 176 generated from reference image 172 and corresponding depth map 174 as well as reference image 182 and corresponding depth map 184, thereby calculating a difference image 186A.

If the intensity value at each pixel location of synthesized image 176 and target image 170 is represented by n bits (e.g., 8 bits), the intensity value at each pixel location has a range of 0 to $2^n$. Thus, the intensity value at each pixel location of difference image 186A will have a range of $-2^n$ to $2^n$ in accordance with the difference calculation. That is, the intensity value at each pixel location of difference image 186A will be represented by (n+1) bits. However, since the intensity value at each pixel location is usually represented by n bits (ranging from 0 to $2^n$), residual image generation unit 162 generates residual image 186 by converting difference image 186A represented by (n+1) bits into n-bit representation. That is, residual image generation unit 162 executes bit plane conversion on difference image 186A generated from the difference between target image 170 and synthesized image 176, thereby generating an image of a smaller bit number. Although any method can be used, this bit plane conversion typically includes processing of deleting a least significant bit.

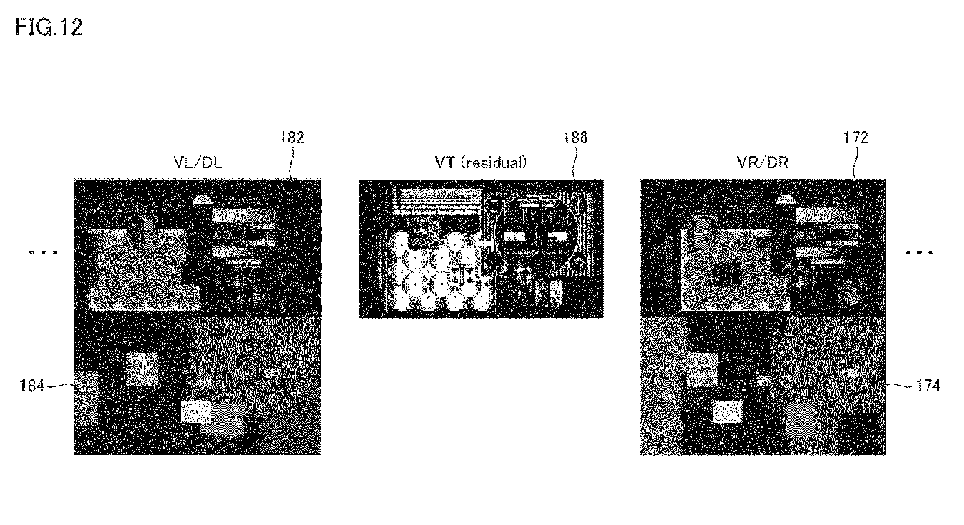

Fig. 12 is a diagram showing a result of the processing of generating residual image 186 by the data size reduction method according to the present embodiment. As shown in Fig. 12, residual image 186 corresponding to target image 170 is generated from target image 170 as well as reference images 172 and 182.

«e6: Generation of Remainder Image»

The processing of generating a remainder image shown in step S108 of Fig. 6 is implemented by remainder image generation unit 164 and subsampling unit 166 shown in Fig. 7. More specifically, a remainder at each pixel location is calculated from side information and gradient images, in accordance with the processing shown in each of steps S1081 to S1083 of Fig. 6. That is, the processing of generating a remainder image shown in step S108 of Fig. 6 includes processing of generating a remainder image 188 composed of remainders at respective pixel locations calculated by performing a modulo operation on the intensity values at the respective pixel locations of target image 170. Remainder image 188 is denoted as "VT (remainder)" referring to a remainder.

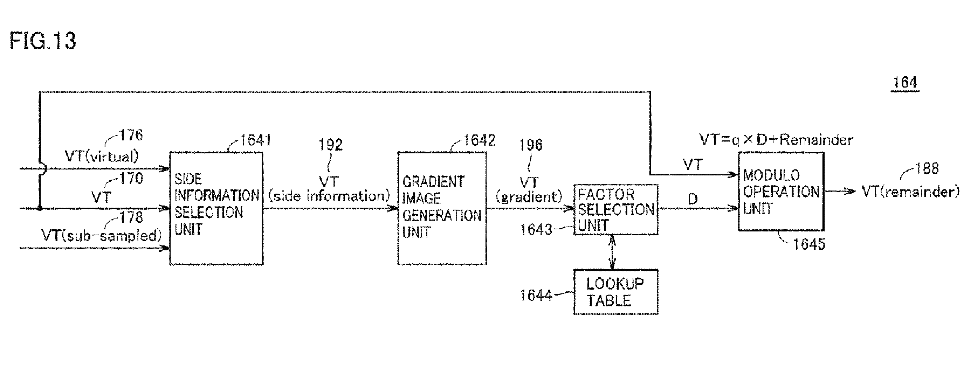

Fig. 13 is a block diagram showing a more detailed functional configuration of remainder image generation unit 164 shown in Fig. 7. Referring to Fig. 13, remainder image generation unit 164 includes a side information selection unit 1641, a gradient image generation unit 1642, a factor selection unit 1643, a Lookup table 1644, and a modulo operation unit 1645.

<<e6-1: Generation of Side Information>>

The processing of generating side information shown in step S1018 of Fig. 6 is implemented by subsampling unit 166 shown in Fig. 7 and side information selection unit 1641 shown in Fig. 13. Side information is information on a virtual view at the location of target image 170, and is generated using target image 170, a subsampled image of target image 170, synthesized image 176, an image obtained by combining the subsampled image of target image 170 and synthesized image 176, and the like. Side information selection unit 1641 appropriately selects input information (image), and outputs side information 192. In Fig. 13, side information 192 is denoted as "VT (side information)".

Subsampling unit 166 generates a subsampled image 178 from target image 170. In Fig. 7, this subsampled image 178 is denoted as "VT (sub-sampled)" which means that it has been obtained by subsampling target image 170.

Any method can be adopted for the processing of generating subsampled image 178 in subsampling unit 166. For example, for every predetermined region, one piece of pixel information contained in that predetermined region can be extracted from target image 170 for output as subsampled image 178.

Alternatively, subsampled image 178 may be generated through any filtering process (e.g., nearest neighbor method, interpolation, bicubic interpolation, or bilateral filter). For example, subsampled image 178 of any size can be generated by dividing target image 170 into regions of predetermined size (e.g., 2x2 pixels, 3x3 pixels, etc.), and in each region, performing linear or non-linear interpolation processing on information on a plurality of pixels contained in that region.

Typically, a method for generating side information 192 can be selected optionally from among the following four methods (a) to (d).

(a) In the case where target image 170 itself is used as side information 192:

Side information selection unit 1641 directly outputs input target image 170 as side information 192. Since target image 170 cannot be used as it is in a decoding process, a synthesized image generated based on reference images is used as side information.

(b) In the case where subsampled image 178 of target image 170 is used as side information 192:

Side information selection unit 1641 directly outputs subsampled image 178 generated by subsampling unit 166 as side information 192.

(c) In the case where synthesized image 176 is used as side information 192:

Side information selection unit 1641 directly outputs synthesized image 176 generated by image synthesis unit 158 as side information 192.

(d) In the case where the combination of subsampled image 178 and synthesized image 176 is used as side information 192:

Side information selection unit 1641 generates side information 192 in accordance with a method which will be described later. In this case, the processing of generating side information shown in step S1018 of Fig. 6 includes processing of combining subsampled image 178 of target image 170 and synthesized image 176 to generate side information 192.

More specifically, side information selection unit 1641 first calculates a weighting factor used for combination. This weighting factor is associated with a reliability distribution of synthesized image 176 with respect to subsampled image 178 of target image 170. That is, the weighting factor is determined based on an error between synthesized image 176 and subsampled image 178 (target image 170) (or the degree of matching therebetween). The calculated error distribution is equivalent to the inverse of the reliability distribution. It can be considered that, as the error is smaller, the reliability is higher. That is, the region with a larger error is considered that the reliability of synthesized image 176 is lower. Thus, more information on subsampled image 178 (target image 170) is assigned to such a region. On the other hand, the region with a smaller error is considered that the reliability of synthesized image 176 is higher. Thus, more information on synthesized image 176 having a smaller error is assigned.

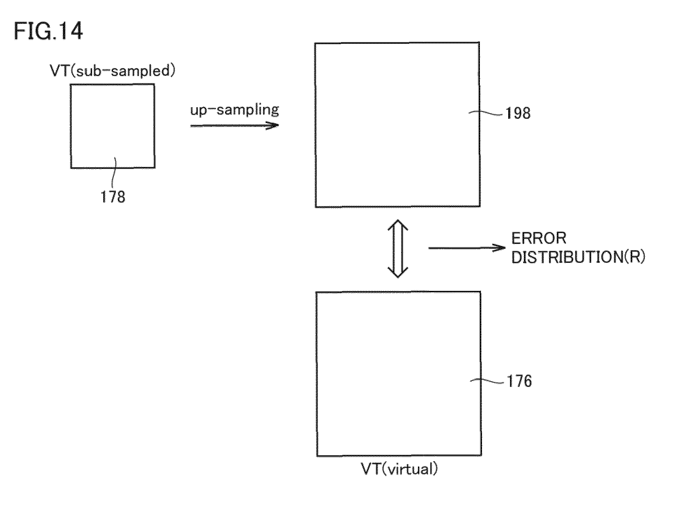

Fig. 14 is a schematic view for illustrating processing of calculating the error distribution used for selecting side information by the data size reduction method according to the present embodiment. Referring to Fig. 14, side information selection unit 1641 obtains the difference in absolute value of intensity value between corresponding pixels of an upsampled image 198 obtained by upsampling subsampled image 178 (VT (sub-sampled)) of target image 170 and synthesized image 176 (VT (virtual)), thereby determining an error distribution R. The reason for upsampling subsampled image 178 is to match the size with synthesized image 176, and to calculate an error assuming processing in the processing of reconstructing target image 170. As a method for upsampling subsampled image 178, a well-known method can be adopted. For example, any filtering process, such as the nearest neighbor method, interpolation, bicubic interpolation, or bilateral filter, can be adopted.

In this way, when the scheme (d) is selected, side information selection unit 1641 determines the error distribution based on the difference between upsampled image 198 obtained by upsampling subsampled image 178 and synthesized image 176. Side information selection unit 1641 combines subsampled image 178 (or upsampled image 198) and synthesized image 176 based on determined error distribution R, to generate side information 192. Although various methods can be considered as a method for generating side information 192 using calculated error distribution R, the following processing examples can be adopted, for example.

(i) Processing example 1: Binary weighted combination

In this processing example, calculated error distribution R is divided into two regions using any threshold value. Typically, a region where the error is higher than the threshold value is called a Hi region, and a region where the error is smaller than the threshold value is called a Lo region. Then, information on subsampled image 178 (substantially, upsampled image 198) or synthesized image 176 is assigned to each pixel of side information 192 in correspondence with the Hi region and the Lo region of error distribution R. More specifically, the value at a pixel location of upsampled image 198 obtained by upsampling subsampled image 178 is assigned to a corresponding pixel location of side information 192 corresponding to the Hi region of error distribution R, and the value at a pixel location of synthesized image 176 is assigned to a corresponding pixel location corresponding to the Lo region of error distribution R.

That is, if upsampled image 198 (image obtained by upsampling subsampled image 178) is denoted as SS and synthesized image 176 is denoted as SY, the value at a pixel location (x, y) of side information 192 (denoted as "SI") is expressed as follows using a predetermined threshold value TH.

$$SI(x, y) = SS(x, y) \ \{if \ R(x, y) \geq TH\}$$
$$= SY(x, y) \ \{if \ R(x, y) < TH\}$$

In this way, in this processing example, side information selection unit 1641 assigns information on upsampled image 198 obtained by upsampling subsampled image 178 to a region with a relatively large error, and assigns information on synthesized image 176 to a region with a relatively small error.

(ii) Processing example 2: Discrete weighted combination

In this processing example, calculated error distribution R is divided into n types of regions using (n-1) threshold values. Assuming the number k of the divided regions as 1, 2, ..., and n in the order that the error increases, the value at the pixel location (x, y) of side information 192 (SI) is expressed as follows using the number k of the divided regions.

$$SI(x, y) = (k/n) \times SY(x, y) + (1-k/n) \times SS(x, y)$$

In this way, in this processing example, side information selection unit 1641 assigns information on upsampled image 198 obtained by upsampling subsampled image 178 to a region with a relatively large error, and assigns information on synthesized image 176 to a region with a relatively small error.

(iii) Processing example 3: Continuous weighted combination

In this processing example, an inverse value of the error at a pixel location is considered as a weighting factor, and side information 192 is calculated using this. Specifically, a value SI(x, y) at the pixel location (x, y) of side information 192 is expressed as follows.

$$SI(x, y) = (1/R(x, y)) \times SY(x, y) + (1-1/R(x, y)) \times SS(x, y)$$

In this way, in this processing example, side information selection unit 1641 assigns information on upsampled image 198 obtained by upsampling subsampled image 178 to a region with a relatively large error, and assigns information on synthesized image 176 to a region with a relatively small error. In this processing example, upsampled image 198 (subsampled image 178) is dominant as the error is larger, and synthesized image 176 is dominant as the error is smaller.

«e6-2: Generation of Gradient Image»

The processing of generating a gradient image shown in step S1082 of Fig. 6 is implemented by gradient image generation unit 1642 shown in Fig. 13. More specifically, gradient image generation unit 1642 generates a gradient image 196 indicating a change on an image space, from side information 192. Gradient image 196 refers to an image having a larger intensity in a region with a larger textural change in side information 192. In Fig. 13, gradient image 196 is denoted as "VT (gradient)." Any filtering process can be used as the processing of generating gradient image 196. The value at each pixel of gradient image 196 is normalized so as to have any integer value within a predetermined range (e.g., 0 to 255).

Typically, gradient image 196 is generated by the following procedure.

(a) Resize side information 192 to an image size of a remainder image to be output.
(b) Apply Gaussian filtering to the resized side information to remove noise (Gaussian smoothing).
(c) Split the filtered side information to color components (i.e., a gray scale image is generated for each color component).
(d) Execute operations of (d1) to (d4) for the gray scale image of each color component.

(d1) Edge detection
(d2) Gaussian smoothing (once or more) (or Median filter)
(d3) a series of morphological operations (e.g., dilation (once or more), erosion (once or more), dilation (once or more))

(d4) Gaussian smoothing (once or more)

Through the operations as described above, a gradient image is generated for each color component constituting side information 192. That is, the processing of generating gradient image 196 shown in S1082 of Fig. 6 includes processing of applying edge detection, smoothing, a series of morphological operations, and smoothing in the order presented to a gray scale image of each color component constituting side information 192. Through such processing, gray scale images are generated by the number of color components contained in side information 192, and a gradient image is generated for each of the gray scale images.

The procedure described herein is merely an example, and the details of processing, procedure and the like of Gaussian smoothing and morphological operations can be designed appropriately.

Furthermore, processing of generating a pseudo gradient image may be adopted. That is, any filtering process may be adopted as long as an image in which a region with a larger textural change in side information 192 has a larger intensity can be generated.

«e6-3: Calculation of Remainder»

The processing of calculating a remainder shown in step S1083 of Fig. 6 is implemented by factor selection unit 1643, Lookup table 1644 and modulo operation unit 1645 shown in Fig. 13. Remainder image 188 indicates a remainder obtained by performing a modulo operation on the value at each pixel location of gradient image 196. For this modulo operation, a factor D to be used as a modulus is selected in accordance with the value at each pixel location of gradient image 196. Factor selection unit 1643 selects factor D in accordance with the value at each pixel location of gradient image 196.

In this way, the processing of calculating a remainder shown in step S1083 of Fig. 6 includes processing of determining factor D in accordance with the gradient for each pixel location of gradient image 196, and performing a modulo operation using, as a modulus, factor D corresponding to the intensity value at each pixel location of target image 170, thereby generating remainder image 188 composed of remainders of the respective pixel locations calculated by the modulo operation.

As a method for selecting factor D, any method can be adopted. For example, the value of gradient image 196 itself may be selected as factor D. However, in order to improve the image quality after decoding, factor D is determined nonlinearly with respect to gradient image 196 in the present embodiment. Specifically, with reference to Lookup table 1644, factor D corresponding to each pixel location of gradient image 196 is selected. Here, factor D is determined for each pixel location of each color component contained in gradient image 196.

In this way, the processing of calculating a remainder shown in step S1083 of Fig. 6 includes processing of selecting factor D corresponding to the gradient with reference to predetermined correspondence. At this time, factor D is determined for each pixel location of gradient image 196 by each color component.

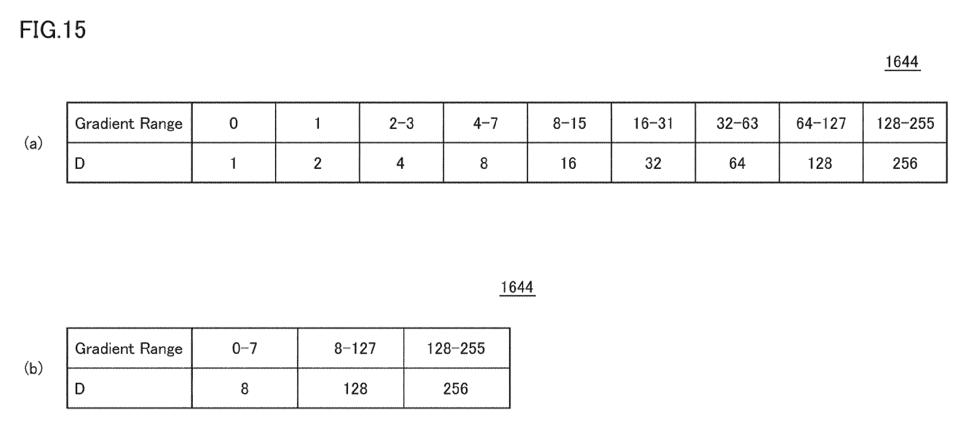

Fig. 15 is a diagram showing an example of Lookup table 1644 used for generating a remainder image according to the present embodiment. As shown in Fig. 15(a), discretization into a plurality of levels is carried out, and factor D corresponding to the value at each pixel location of gradient image 196 is selected. In Lookup table 1644 shown in Fig. 15(a), a value to be used as the modulus in the modulo operation is designed to be a power of two. By assigning factor D in this way, the modulo operation can be accelerated. Lookup table 1644 can be designed optionally. For example, lookup table 1644 with a smaller number of levels as shown in Fig. 15(b) may be adopted. Furthermore, it is not always necessary to use a Lookup table, but factor D may be determined using a predetermined function or the like.

Returning to Fig. 13, factor selection unit 1643 selects factor D for each pixel location of gradient image 196 by each color component. Modulo operation unit 1645 performs a modulo operation on target image 170 using factor D determined in accordance with gradient image 196, thereby calculating a remainder.

Modulo operation unit 1645 performs a modulo operation on the intensity value at each pixel location using corresponding factor D as a modulus. More specifically, a minimum m with which the intensity value $P = q \times D + m$ ($q \geq 0$, $D > 0$) at each pixel location holds is determined. Herein, q is a quotient, and m is a remainder.

Since "intensity value $P = q' \times D + m$" is calculated in processing of reconstructing target image 170 (decoding process) which will be described later, remainder m calculated at each pixel location by each color component is stored as remainder image 188. That is, remainder m at each pixel location constitutes remainder image 188.

Remainder image 188 may be resized to any size using a well-known downsampling method or upsampling method.

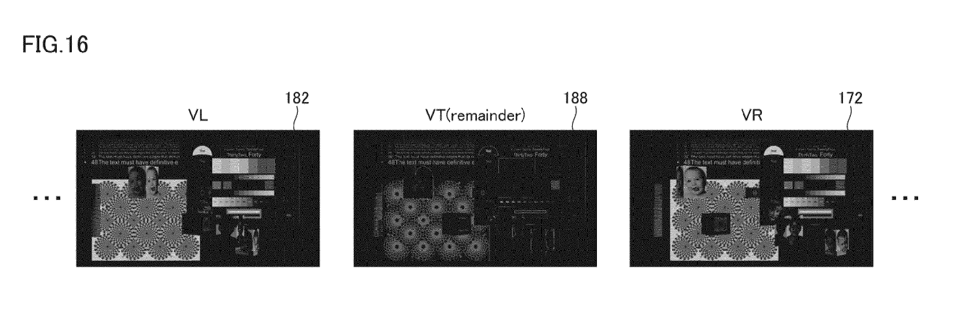

Fig. 16 is a diagram showing a result of processing of generating the remainder image according to the present embodiment. As shown in Fig. 16, remainder image 188 for target image 170 is generated based on reference images 172 and 182.

«e7: Generation of Hybrid Image»

The processing of generating a hybrid image shown in step S110 and the processing of outputting a processing result shown in step S 112 of Fig. 6 are implemented by image combining unit 168 shown in Fig. 7. Image combining unit 168 combines residual image 186 and remainder image 188 in accordance with mask image 180 to generate hybrid image 190. Hybrid image 190 is denoted as "VT (hybrid)."

More specifically, the processing of generating a hybrid image shown in step S110 of Fig. 6 includes processing of assigning, based on mask image 180, a region with a relatively large potential error, information on a corresponding region of residual image 186, thereby generating a converted image (hybrid image 190) corresponding to target image 170. Furthermore, the processing of generating a hybrid image shown in step S110 of Fig. 6 includes processing of assigning, based on mask image 180, a region with a relatively small potential error, information on a corresponding region of remainder image 188.

Image combining unit 168 selects one of residual image 186 and remainder image 188 in accordance with the value at each pixel location of mask image 180, and outputs the value at a corresponding pixel location as an intensity value at a corresponding pixel location of hybrid image 190. More specifically, image combining unit 168 adopts the value at the corresponding pixel location of remainder image 188 if mask image 180 has a value of "0", and adopts the value at the corresponding pixel location of residual image 186 if mask image 180 has a value other than "0". That is, the value at each pixel location of mask image 180 indicates the magnitude of error between reference images, and if it has a value of "0" (when the error is relatively small), remainder image 188 with which a reconstructed image will have higher image quality is selected, and if it has a value other than "0" (when the error is relatively large), residual image 186 with a smaller amount of information is selected. In this way, hybrid image 190 is generated by selectively combining residual image 186 and remainder image 188 in accordance with the two regions included in mask image 180.

In this way, hybrid image 190 for representing a plurality of images containing mutually similar information is obtained by assigning information on a region of residual image 186 in accordance with the difference between target image 170 and synthesized image 176 to a corresponding region of synthesized image 176 generated based on reference images 172 and 182 where the potential error with respect to target image 170 is relatively large.

As described above, by appropriately combining residual image 186 and remainder image 188 to generate hybrid image 190, data size can be reduced, and the quality of a reconstructed image can be maintained at a more suitable level.

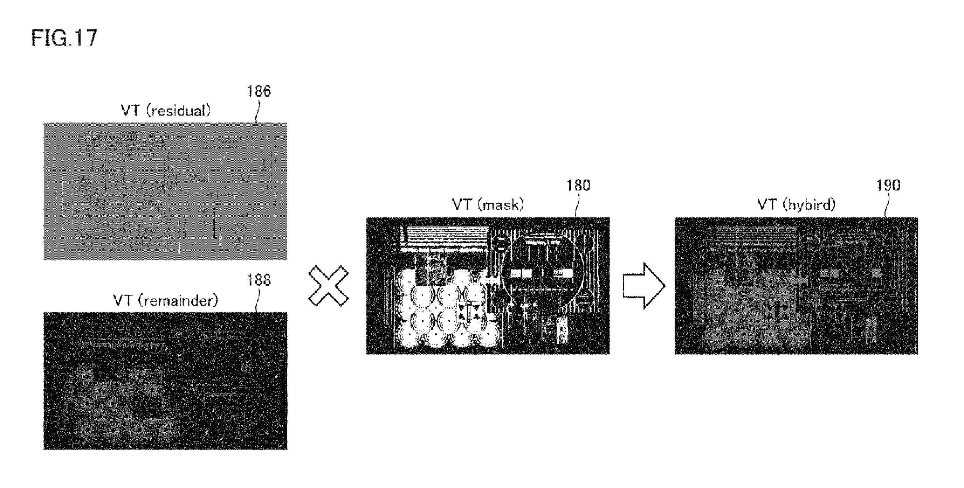

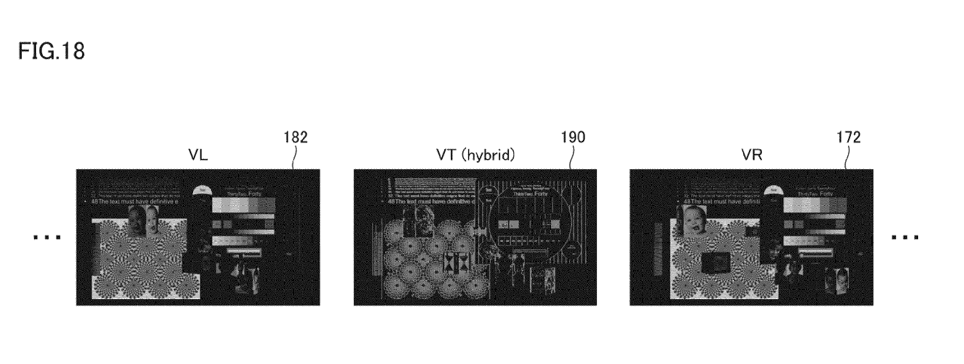

Figs. 17 and 18 each show a result of processing of generating a hybrid image according to the present embodiment. As shown in Fig. 17, hybrid image 190 is generated by appropriately combining residual image 186 and remainder image 188 based on mask image 180. Accordingly, as shown in Fig. 18, hybrid image 190 for target image 170 is generated based on reference images 172 and 182.

As a final output of the encoding process by the data size reduction method according to the present embodiment, at least reference images 172 and 182 as input and hybrid image 190 as a processing result are stored. As an option, depth map 174 of reference image 172 and depth map 184 of reference image 182 may be output. As another option, subsampled image 178 may be output together with remainder image 188. These pieces of information (images) added as options are suitably selected in accordance with the details of processing in the decoding process.

The above-described description has been given paying attention to the set of one target image 170 and two reference images 172, 182. Similar processing is executed on all of target images and respectively corresponding reference images set for a plurality of input images (multi-view images or a sequence of video frames).

«e8: Processing Example»

A processing example of a decoding process by the data size reduction method according to the present embodiment will now be described.

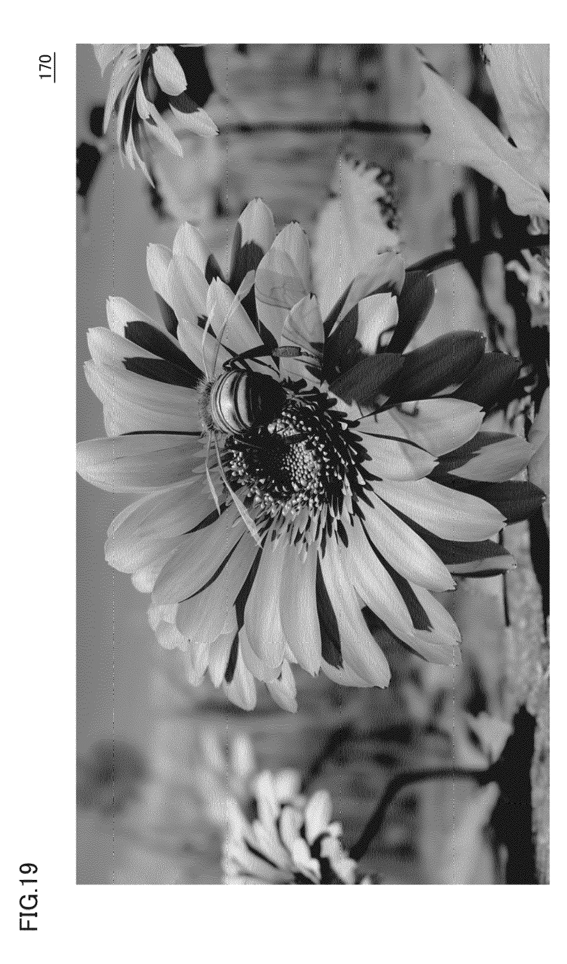

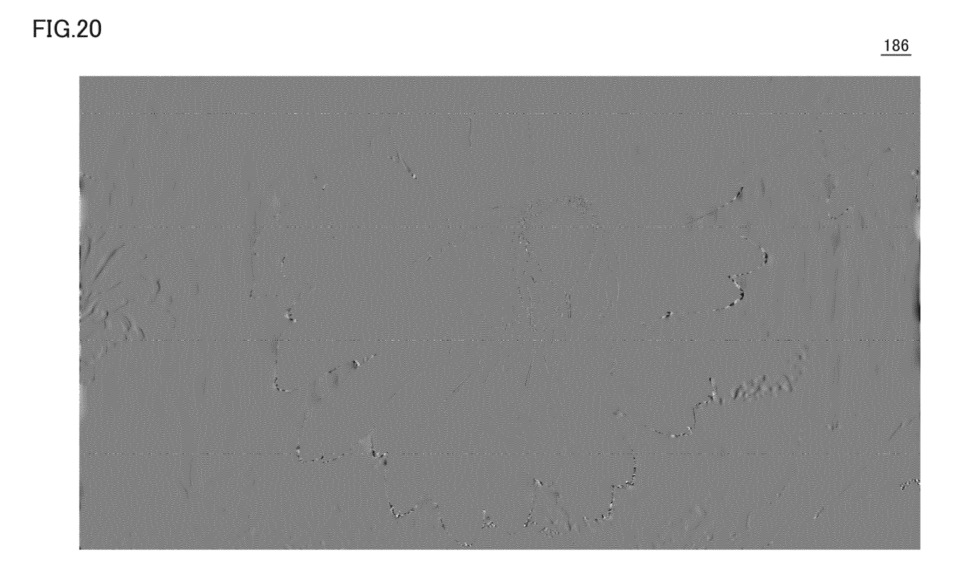

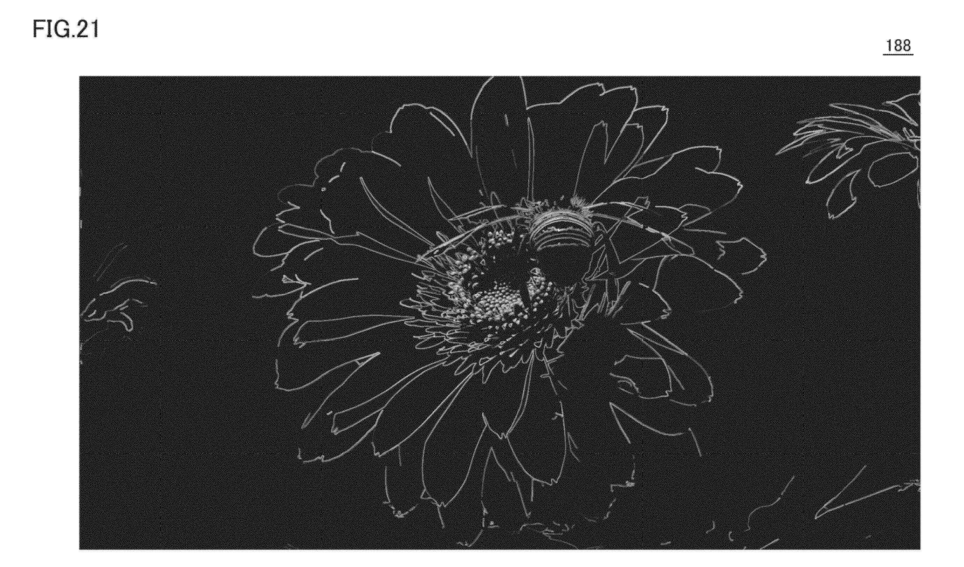

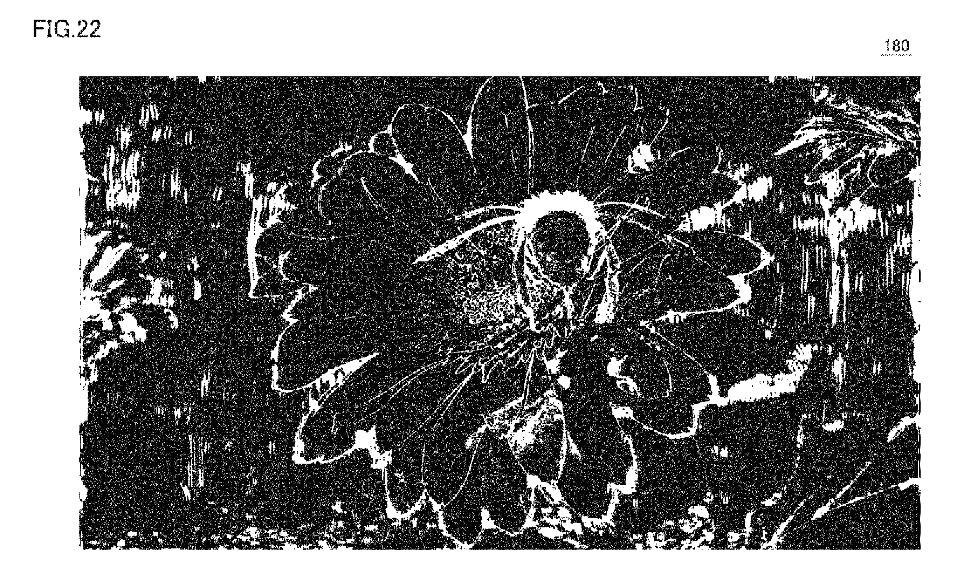

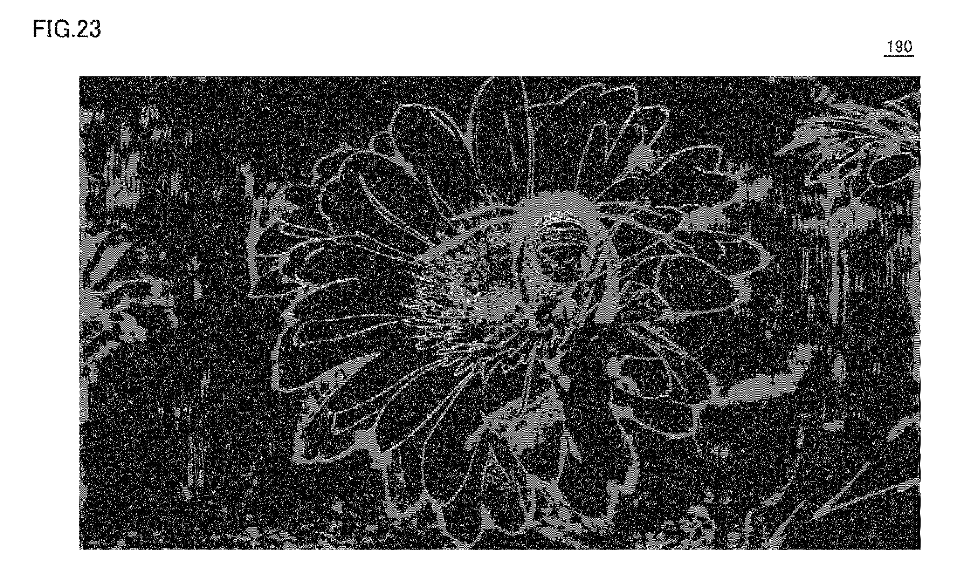

Fig. 19 shows an example of target image 170 input in a decoding process by the data size reduction method according to the present embodiment. Fig. 20 shows an example of residual image 186 generated from target image 170 shown in Fig. 19. Fig. 21 shows an example of remainder image 188 generated from target image 170 shown in Fig. 19. Fig. 22 shows an example of mask image 180 generated from target image 170 shown in Fig. 19. Fig. 23 shows an example of hybrid image 190 generated from target image 170 shown in Fig. 19.

It is understood that even in the case of high-definition target image 170 as shown in Fig. 19, the amount of change within that image is not very large in residual image 186 shown in Fig. 20, and sufficiently reduced data size can be achieved. It is also understood that, for remainder image 188 shown in Fig. 21, many portions are black, and reduced data size can be achieved.

Furthermore, by assigning a component of residual image 186 to white portions of the mask image shown in Fig. 22 and assigning a component of remainder image 188 to black portions, hybrid image 190 as shown in Fig. 23 is generated.

[F. Decoding Process]

Next, the details of a decoding process (steps S200 to S214 of Fig. 6) by the data size reduction method according to the present embodiment will be described. Since it is basically inverse processing of the encoding process, the detailed description of similar processing will not be repeated.

<<f1: Functional Configuration>>

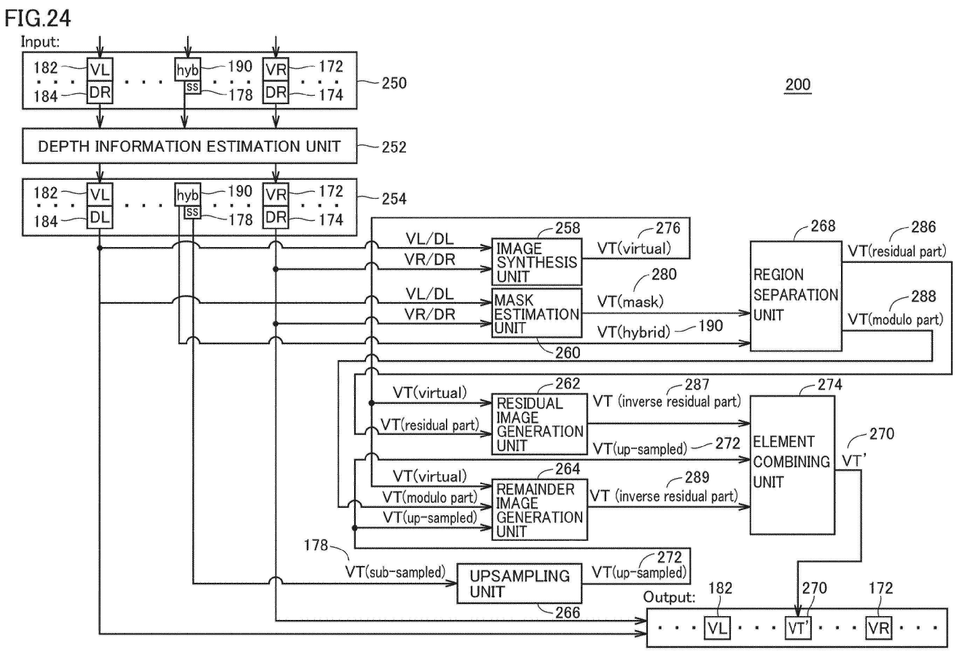

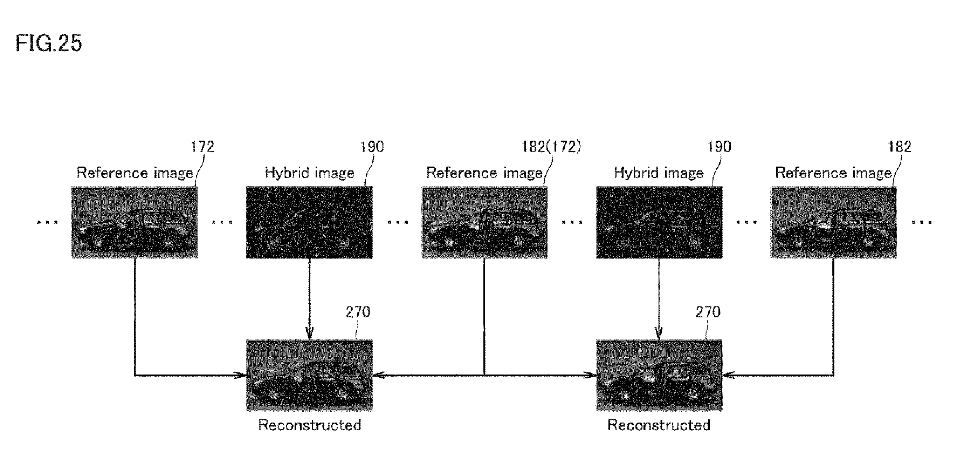

Fig. 24 is a block diagram showing a functional configuration related to the decoding process by the data size reduction method according to the present embodiment. Fig. 25 is a schematic view for illustrating the overview of the decoding process by the data size reduction method according to the present embodiment. The notation in Fig. 24 is in accordance with the notation in Fig. 7.

Referring to Fig. 24, information processing apparatus 200 includes, as its functional configuration, an input data buffer 250, a depth information estimation unit 252, a depth information buffer 254, an image synthesis unit 258, a mask estimation unit 260, a residual image generation unit 262, a remainder image generation unit 264, an upsampling unit 266, a region separation unit 268, and an element combining unit 274.

Information processing apparatus 200 reconstructs original target image 170 using encoded information (reference images 172, 182 and hybrid image 190). For example, as shown in Fig. 25, reference images 172, 182 and hybrid image 190 are arranged alternately, and information processing apparatus 200 performs a decoding process for each hybrid image 190 using corresponding reference images 172 and 182, thereby inverting a reconstructed image 270 corresponding to original target image 170. As shown in Fig. 25, a single reference image may be associated with a plurality of target images.

«f2: Acquisition of Input Data and Depth Map»

The acquisition processing in the encoding process shown in step S200 of Fig. 6 is implemented by input data buffer 250, depth information estimation unit 252 and depth information buffer 254 shown in Fig. 24. Specifically, information processing apparatus 200 at least receives reference images 172, 182 and hybrid image 190 generated by the above-described decoding process. As described above, if depth maps 174 and 184 corresponding to reference images 172 and 182, respectively, are transmitted altogether, these depth maps are also used for the decoding process.

On the other hand, if depth maps 174 and 184 are not input, depth information estimation unit 252 generates depth maps 174 and 184 corresponding to reference images 172 and 182, respectively. Since the method for estimating depth maps in depth information estimation unit 252 is similar to the above-described method for estimating depth maps in depth information estimation unit 152 (Fig. 7), a detailed description thereof will not be repeated. Depth maps 174 and 184 generated by depth information estimation unit 252 are stored in depth information buffer 254.

«f3: Generation of Synthesized Image»

The processing of generating a synthesized image shown in step S202 of Fig. 6 is implemented by image synthesis unit 258 shown in Fig. 24. More specifically, image synthesis unit 258 generates a synthesized image 276 indicating a virtual view at the location of target image 170 using reference image 172 and corresponding depth map 174 as well as reference image 182 and corresponding depth map 184. Since the method for generating a synthesized image in image synthesis unit 258 is similar to the above-described method for generating a synthesized image in image synthesis unit 158 (Fig. 7), a detailed description thereof will not be repeated. It is noted that when a plurality of received images represent a sequence of video frames (moving picture), information on a frame corresponding to target image 170 can be generated by performing interpolation processing or extrapolation processing based on information on frames corresponding to two reference images 172 and 182.

«f4: Generation of Mask Image and Region Separation»

The processing of generating a mask image shown in step S204 of Fig. 6 is implemented by mask estimation unit 260 shown in Fig. 24, and processing of separating a residual image region and a remainder image region shown in step S206 is implemented by region separation unit 268 shown in Fig. 24.

Mask estimation unit 260 generates a mask image 280 indicating the magnitude of error between reference images using reference image 172 and corresponding depth map 174 as well as reference image 182 and corresponding depth map 184. Since the method for generating a mask image in mask estimation unit 260 is similar to the above-described method for generating a mask image in mask estimation unit 160 (Fig. 7), a detailed description thereof will not be repeated.

Region separation unit 268 performs separation into a residual image region 286 and a remainder image region 288 from mask image 280 and hybrid image 190. In Fig. 24, residual image region 286 is denoted as "VT (residual part)", and remainder image region 288 is denoted as "VT (modulo part)." In this way, the processing of generating a mask image shown in step S204 of Fig. 6 includes processing of comparing the value at each pixel location of mask image 280 with a predetermined threshold value, thereby distinguishing between a region with a relatively large potential error and a region with a relatively small potential error.

Specifically, if mask image 280 has a value of "0", region separation unit 268 outputs the value at a corresponding pixel location of hybrid image 190 as the value of remainder image region 288. If mask image 280 has a value other than "0", region separation unit 268 outputs the value at a corresponding pixel location of hybrid image 190 as the value of residual image region 286. In this way, hybrid image 190 is separated into two independent images based on mask image 280. Remainder image region 288 and residual image region 286 are generated for each color component included in hybrid image 190.

«f5: Reconstruction of Residual Image Region»

The processing of reconstructing a residual image region shown in step S208 of Fig. 6 is implemented by residual image generation unit 262 shown in Fig. 24. More specifically, residual image generation unit 262 adds the intensity values of corresponding pixels between synthesized image 276 and residual image region 286, thereby generating a reconstructed image 287 of residual image region 286. That is, the processing of reconstructing a residual image region shown in step S208 of Fig. 6 includes processing of extracting information on a region of hybrid image 190 with a relatively large potential error based on mask image 280, and determining the intensity value at a corresponding pixel location of target image 170 based on the extracted information and synthesized image 276. Reconstructed image 287 is denoted as "VT (inverse residual part)" in the sense that residual image region 286 has been inverted.

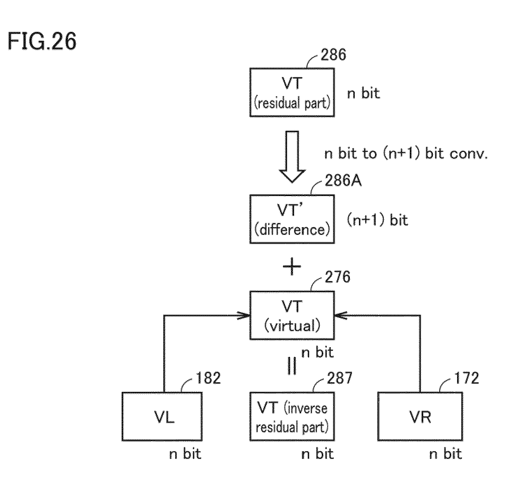

Fig. 26 is a schematic view for illustrating processing of generating reconstructed image 287 by the data size reduction method according to the present embodiment. Referring to Fig. 26, residual image generation unit 262 adds intensity values between synthesized image 276 and residual image region 286, thereby calculating a corresponding intensity value of reconstructed image 287.

As described with reference to Fig. 11, the residual image contained in hybrid image 190 is obtained by converting the (n+1) bit representation into the n-bit representation. When reconstructing the residual image region, it is necessary to perform reconversion of this bit conversion. Residual image generation unit 262 converts residual image region 286 represented by n bits (e.g., 8 bits) into a difference image 286A in (n+1)-bit representation (e.g., 9-bit representation). That is, residual image generation unit 262 performs bit plane conversion on information on a region of hybrid image 190 with a relatively large potential error. Then, residual image generation unit 262 adds difference image 286A whose bit number has been increased by the bit plane conversion and synthesized image 276, thereby determining the intensity value. That is, residual image generation unit 262 adds the values at corresponding pixel locations between difference image 286A and synthesized image 276 to generate reconstructed image 287.

«f6: Reconstruction of Remainder Image Region»

The processing of reconstructing a remainder image region shown in step S210 of Fig. 6 is implemented by remainder image generation unit 264 and upsampling unit 266 shown in Fig. 24. By calculating a remainder at each pixel location from side information and a gradient image in accordance with the processing shown in each of steps S2101 to S2103 of Fig. 6, a reconstructed image 289 of remainder image region 288 is generated. That is, the processing of reconstructing a remainder image region shown in step S210 of Fig. 6 includes processing of performing an inverse modulo operation on information on a region of hybrid image 190 with a relatively small potential error based on mask image 280, thereby determining the intensity value at a corresponding pixel location of target image 170. Reconstructed image 289 is denoted as "VT (inverse remainder part)" in the sense that remainder image region 288 has been inverted.

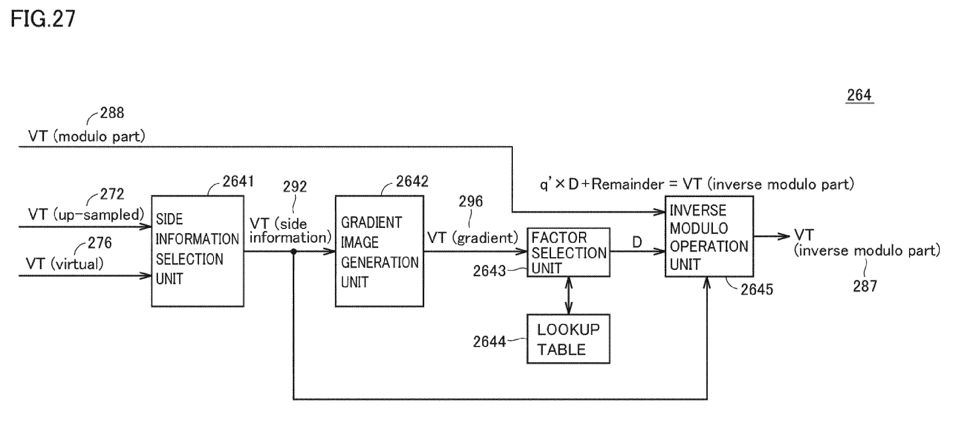

Fig. 27 is a block diagram showing a more detailed functional configuration of remainder image generation unit 264 shown in Fig. 24. Referring to Fig. 27, remainder image generation unit 264 includes a side information selection unit 2641, a gradient image generation unit 2642, a factor selection unit 2643, a Lookup table 2644, and an inverse modulo operation unit 2645.

<<f6-1: Generation of Side Information>>

The processing of generating side information shown in step S2101 of Fig. 6 is implemented by side information selection unit 2641 shown in Fig. 27. More specifically, side information selection unit 2641 generates side information 292 based on an upsampled image 272 obtained by upsampling subsampled image 178 (if subsampled image 178 is contained in input data), a synthesized image 276 and a combination thereof.

As described above, subsampled image 178 may not be contained in input data. In this case, side information selection unit 2641 generates side information 292 based on synthesized image 276 generated by image synthesis unit 258.

On the other hand, if subsampled image 178 is contained in input data, side information selection unit 2641 may use upsampled image 272 obtained by upsampling subsampled image 178 as side information 292, or may generate side information by the combination of upsampled image 272 and synthesized image 276.

Upsampling unit 266 shown in Fig. 24 upsamples subsampled image 178 contained in input data to generate upsampled image 272. As a method for upsampling subsampled image 178, a well-known method can be adopted. For example, any filtering process, such as the nearest neighbor method, interpolation, bicubic interpolation, or bilateral filter, can be adopted.

For such processing of generating side information by the combination of upsampled image 272 and synthesized image 276, binary weighted combination, discrete weighted combination, continuous weighted combination, or the like can be adopted using the error distribution as described above. Since these processes have been described above, a detailed description thereof will not be repeated.

«f6-2: Generation of Gradient Image»

The processing of generating a gradient image shown in step S2102 of Fig. 6 is implemented by gradient image generation unit 2642 shown in Fig. 27. More specifically, gradient image generation unit 2642 generates a gradient image 296 indicating a change on an image space, from side information 292. Since the method for generating a gradient image in gradient image generation unit 2642 is similar to the above-described method for generating a gradient image in gradient image generation unit 1642 (Fig. 13), a detailed description thereof will not be repeated.

«f6-3: Determination of Intensity Value»

The processing of determining an intensity value at each pixel location of a target image shown in step S2103 of Fig. 6 is implemented by factor selection unit 2643, Lookup table 2644 and inverse modulo operation unit 2645 shown in Fig. 27. The intensity value at each pixel location of the target image is estimated by an inverse modulo operation from the value (remainder m) at a corresponding pixel location of remainder image region 288 separated from hybrid image 190 and factor D used when generating remainder image 188 constituting hybrid image 190.

In this inverse modulo operation, factor D used when generating hybrid image 190 (remainder image 188) in the encoding process is estimated (selected) based on gradient image 296. That is, factor selection unit 2643 selects factor D in accordance with the value at each pixel location of gradient image 296. Although any method can be adopted as a method for selecting this factor D, factor D at each pixel location is selected with reference to Lookup table 2644 in the present embodiment. Lookup table 2644 is similar to Lookup table 1644 (Fig. 15) used in the encoding process. Factor selection unit 2643 selects factor D for each pixel location of gradient image 296 by each color component, with reference to Lookup table 2644.

Inverse modulo operation unit 2645 performs an inverse modulo operation using selected factor D and remainder m for each pixel location, as well as corresponding value SI of side information 292. More specifically, inverse modulo operation unit 2645 calculates a list of candidate values C(q') for the intensity value of reconstructed image 289 in accordance with the expression C(q') =q'xD+m (where q'≥0, C(q')<256), and among these calculated candidate values C(q'), one with the smallest difference (absolute value) from corresponding value SI of side information 292 is determined as a corresponding intensity value of reconstructed image 289.

For example, considering the case where factor D = 8, remainder m = 3, and corresponding value SI of side information 292 = 8, candidate values C(q') are obtained as follows:

$$\text{Candidate value } C(0) = 0 \times 8 + 3 = 3 \quad (\text{difference from SI} = 5)$$

$$\text{Candidate value } C(1) = 1 \times 8 + 3 = 11 \quad (\text{difference from SI} = 3)$$

$$\text{Candidate value } C(2) = 2 \times 8 + 3 = 19 \quad (\text{difference from SI} = 11)$$

Among these candidate values C(q'), candidate value C(1) with the smallest difference from corresponding value SI of side information 292 is selected, and the corresponding intensity value of reconstructed image 289 is determined as "11". The intensity value at each pixel location of reconstructed image 289 is thereby determined by each color component.

In this way, the process of reconstructing a remainder image region shown in step S210 of Fig. 6 includes processing of determining factor D in accordance with the gradient for each pixel location of gradient image 296, and among candidate values C(q') calculated by the inverse modulo operation using determined factor D as a modulus and using the value at a corresponding pixel location of remainder image region 288 as remainder m, determining one with the smallest difference from the value at a corresponding pixel location of side information 292 as the intensity value at a corresponding pixel location of reconstructed image 289.

<<f7: Combination>>

The processing of reconstructing a target image shown in step S212 of Fig. 6 and the output processing shown in step S214 are implemented by element combining unit 274 shown in Fig. 24. More specifically, element combining unit 274 combines reconstructed image 287 corresponding to the residual image region and reconstructed image 289 corresponding to the remainder image region to generate reconstructed image 270. As will be described later, upsampled image 272 obtained by upsampling subsampled image 178 may be used for generation of reconstructed image 270.

Since the residual image region and the remainder image region have been separated from hybrid image 190, reconstructed image 270 can be basically generated by simply combining reconstructed image 287 corresponding to the residual image region and reconstructed image 289 corresponding to the remainder image region. That is, for each pixel location, either one of reconstructed image 287 and reconstructed image 289 contains information on an inverted intensity value, and information contained in the other one is invalid. Therefore, reconstructed image 270 can be generated by combining (adding) the values of both reconstructed image 287 and reconstructed image 289 for each pixel location.

As the final output of the decoding process according to the present embodiment, at least reconstructed image 270 obtained as a result of processing as well as reference images 172 and 182 as input are output and/or stored. As an option, depth map 174 of reference image 172 and depth map 184 of reference image 182 may be output. Furthermore, reconstructed image 270 may be resized to any size depending on the difference in size from original target image 170 and/or two reference images 172 and 182.

Although the above-described description has been given paying attention to the set of one target image 170 and two reference images 172 and 182, a similar process is executed on all target images and respective corresponding reference images set for a plurality of input images (multi-view images or a sequence of video frames).

[G. Variation]

The data size reduction method according to the embodiment described above may be varied as will be described below.

<<g1: Variation 1>>

In the decoding process by the data size reduction method according to the embodiment described above, reconstructed image 270 is generated by combining reconstructed image 287 corresponding to the residual image region and reconstructed image 289 corresponding to the remainder image region. However, a local noise due to some error may be produced in an image. In such a case, element combining unit 274 (Fig. 24) may compare a generated reconstructed image and upsampled image 272, and a region with a relatively large difference in intensity value may be compensated using information on upsampled image 272.

More specifically, element combining unit 274 calculates the intensity difference (absolute value) at corresponding pixel locations between the reconstructed image obtained by combining reconstructed image 287 and reconstructed image 289, and upsampled image 272 obtained by upsampling subsampled image 178. If there is a pixel in which this calculated intensity difference exceeds a predetermined threshold value, element combining unit 274 replaces the value of the generated reconstructed image corresponding to that pixel by the value of a corresponding pixel of subsampled image 178. Then, the reconstructed image after replacement is output finally. That is, the method according to the present variation includes processing of replacing a region, of a target image reconstructed by the inverted intensity value, having a relatively large difference from upsampled image 272 obtained by upsampling subsampled image 178, by a corresponding value of upsampled image 272.

By performing compensation (i.e. replacement of intensity values) using upsampled image 272 in this way, local noise and the like that may be produced in reconstructed image 270 can be reduced.

«g2: Variation 2»

Although the above-described embodiment illustrates the processing of selecting factor D from among a plurality of candidates in generation of a remainder image, the processing of selecting factor D may be simplified further. For example, a gradient image for each gray scale image may be generated, and the threshold value for this gradient image may be determined stepwisely. For example, in the case of an 8-bit image, the threshold values for a gradient image may be set at "4", "1" and "0", respectively, such that if the gradient has a value of more than or equal to "4", "32" is selected as factor D, if the gradient has a value of more than or equal to "1", "128" is selected as factor D, and if the gradient has a value of "0", "256" is selected as factor D.

A user can optionally set the combination of a threshold value for a gradient image and corresponding factor D.

«g3: Variation 3»

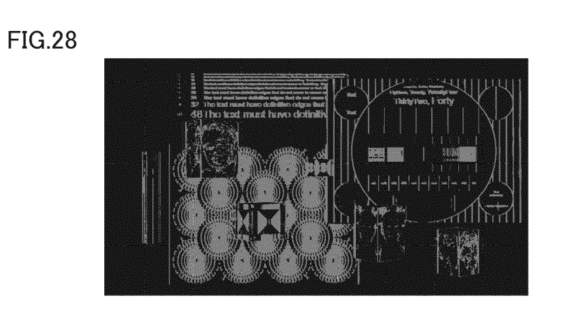

Although in the above-described embodiment, a remainder image containing a remainder calculated for each pixel in accordance with selected factor D is generated, the remainder may be determined stepwisely. For example, a corresponding value in the set of predetermined remainders may be selected depending on which range each of remainders obtained by performing a modulo operation using certain factor D belongs to. For example, when factor D is "64", the threshold value for the remainder is set at "16". If the calculated remainder is more than or equal to "16", "32" may be output as a final remainder, and if the calculated remainder is less than "16", "0" may be output as a final remainder. Fig. 28 shows an example of a remainder image generated by a data size reduction method according to Variation 3 of the present embodiment.

Threshold values and remainders to be output may be determined in three or more levels. By using such a remainder image, the amount of information can be reduced further.

«g4: Variation 4»

Although a residual image having an n-bit gradation value is generated in the above-described embodiment, the remainder may be determined stepwisely. For example, when a calculated remainder is relatively large, the calculated remainder itself is used for maintaining the reconstructed image quality, while when the calculated remainder is relatively small, a predetermined value may be set because the image reconstruction processing is little affected.

For example, when the calculated remainder is more than or equal to a predetermined threshold value, the calculated remainder itself may be used, while when the calculated remainder is less than the threshold value, a predetermined value (e.g., 128) may be used.

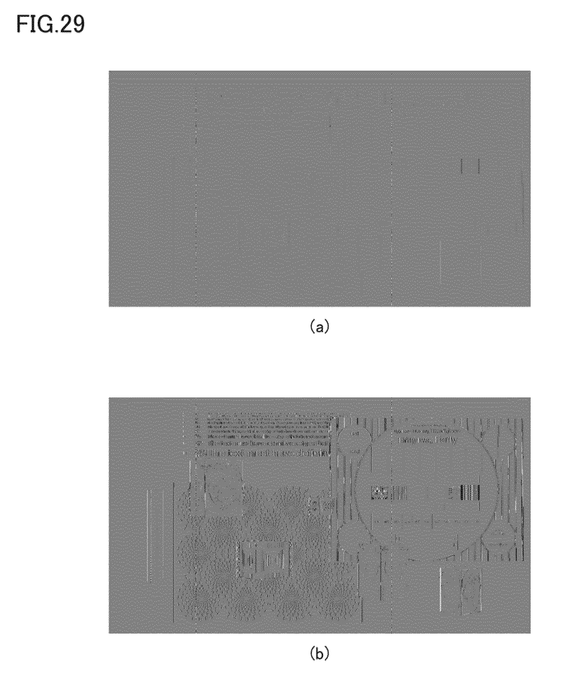

Fig. 29 shows an example of a residual image generated by a data size reduction method according to Variation 4 of the present embodiment. Fig. 29(a) shows a residual image generated by the method according to Variation 4 of the present embodiment, and Fig. 29(b) shows an image obtained by performing image processing on the image shown in Fig. 29(a) to increase a difference from gray for visualization.

«g5: Variation 5»

The above-described embodiment illustrates the processing example of generating a hybrid image from a residual image and a remainder image and converting a target image into this hybrid image. Although the remainder image is used for reconstructing a region with a small error between reference images, such a region can also be interpolated by side information. Therefore, a hybrid image not containing a remainder image may be adopted.

Such a hybrid image contains information effective only for a residual image region (residual image 186), and does not contain information on a remainder image region (remainder image 188). When reconstructing a target image, the residual image region is reconstructed from a hybrid image, and the remainder image region is reconstructed from side information. This side information is generated based on reference images 172 and 182 as well as subsampled image 178 of target image 170 output together with the hybrid image, and the like.

By adopting such a hybrid image, data size can be reduced further.

[H. Advantages]

According to the present embodiment, reconstruction to a higher quality image can be achieved as compared with an encoding process using only a residual image or only a remainder image. In addition, data size can be reduced further as compared with the encoding process using only a residual image or only a remainder image.

The present embodiment is applicable to various applications for image processing systems, such as data representation of multi-view images or a new data format before image compression.

According to the present embodiment, more efficient representation can be derived using a remainder-based data format for large-scale multi-view images. Moreover, the converted data format can be used for devices with small power capacity, such as mobile devices. Therefore, according to the present embodiment, the possibility of providing 3D features more easily on mobile devices or low power consumption devices can be increased.

It should be understood that the embodiment disclosed herein is illustrative and non-restrictive in every respect. The scope of the present invention is defined by the claims not by the description above, and is intended to include any modification within the meaning and scope equivalent to the terms of the claims.

REFERENCE SIGNS LIST

1 3D displays reproduction system; 2 subject; 10 camera; 100,200 information processing apparatus; 102, 202 wireless transmission device; 104, 204 processor; 106, 206 memory; 108 camera interface; 110, 210 hard disk; 112, 212 image data; 114 encoding program; 116, 216 input unit; 118, 218 display unit; 120, 220 communication interface; 122, 222 bus; 150 input image buffer; 152, 252 depth information estimation unit; 154, 254 depth information buffer; 158, 258 image synthesis unit; 160, 260 mask estimation unit; 162, 262 residual image generation unit; 164, 264 remainder image generation unit; 166 subsampling unit; 168 image combining unit; 170 target image; 172, 182 reference image; 173,183 transformed image; 174, 184 depth map; 175, 185 error image; 176,276 synthesized image; 177 binarized error image; 178 subsampled image; 179,189 binarized error transformed image; 180, 280 mask image; 186 residual image; 186A, 286A difference image; 188 remainder image; 190 hybrid image; 192,292 side information; 196, 296 gradient image; 198, 272 upsampled image; 208 projector interface; 214 decoding program; 250 input data buffer; 266 upsampling unit; 268 region separation unit; 270, 287, 289 reconstructed image; 274 element combining unit; 286 residual image region; 288 remainder image region; 300 3D display device; 302 controller; 304 projector array; 306 diffusion film; 308 condenser lens; 400 wireless base station; 1641-2641 side information selection unit; 1642-2642 gradient image generation unit; 1643-2643 factor selection unit; 1644-2644 Lookup table; 1645 modulo operation unit; 2645 inverse modulo operation unit.

**Claims**

1. A method for reducing data size of a plurality of images containing mutually similar information, comprising the steps of:

   acquiring the plurality of images, and selecting, from among the plurality of images, a target image as well as a first reference image and a second reference image similar to the target image;
   generating a synthesized image corresponding to the target image based on the first reference image and the second reference image;
   generating a mask image indicating a potential error of the synthesized image generated based on the first reference image and the second reference image, with respect to the target image;
   generating a residual image in accordance with a difference between the target image and the synthesized image;
   generating a converted image corresponding to the target image by assigning, based on the mask image, a region where the potential error is relatively large, information on a corresponding region of the residual image; and
   outputting the first reference image, the second reference image and the converted image as information representing the target image, the first reference image and the second reference image.

2. The method according to claim 1, further comprising the step of generating a remainder image composed of a remainder at each pixel location calculated by performing a modulo operation on an intensity value at each pixel location of the target image, wherein
   the step of generating the converted image includes a step of assigning, based on the mask image, a region where the potential error is relatively small, information on a corresponding region of the remainder image.

3. The method according to claim 1 or 2, wherein the step of generating the converted image includes a step of comparing a value at each pixel location of the mask image with a predetermined threshold value to distinguish between a region where the potential error is relatively large and a region where the potential error is relatively small.

4. The method according to any one of claims 1 to 3, further comprising the steps of:

   acquiring the first reference image, the second reference image and the converted image having been output;

generating a synthesized image corresponding to the target image based on the first reference image and the second reference image having been acquired;

generating a mask image based on the first reference image and the second reference image having been acquired; and

extracting information on a region of the converted image where the potential error is relatively large based on the mask image, and determining an intensity value at a corresponding pixel location of the target image based on the extracted information and the synthesized image.

5. The method according to any one of claims 1 to 4, wherein the step of selecting includes steps of

selecting the target image as well as the first reference image and the second reference image based on a baseline distance when the plurality of images are multi-view images, and

selecting the target image as well as the first reference image and the second reference image based on a frame rate when the plurality of images represent a sequence of video frames.

6. A program for reducing data size of a plurality of images containing mutually similar information, the program causing a computer to execute the steps of:

acquiring the plurality of images, and selecting, from among the plurality of images, a target image as well as a first reference image and a second reference image similar to the target image;

generating a synthesized image corresponding to the target image based on the first reference image and the second reference image;

generating a mask image indicating a potential error of the synthesized image generated based on the first reference image and the second reference image, with respect to the target image;

generating a residual image in accordance with a difference between the target image and the synthesized image;

generating a converted image corresponding to the target image by assigning, based on the mask image, a region where the potential error is relatively large, information on a corresponding region of the residual image; and

outputting the first reference image, the second reference image and the converted image as information representing the target image, the first reference image and the second reference image.

7. An apparatus for reducing data size of a plurality of images containing mutually similar information, comprising:

a means for acquiring the plurality of images, and selecting, from among the plurality of images, a target image as well as a first reference image and a second reference image similar to the target image;

a means for generating a synthesized image corresponding to the target image based on the first reference image and the second reference image;

a means for generating a mask image indicating a potential error of the synthesized image generated based on the first reference image and the second reference image, with respect to the target image;

a means for generating a residual image in accordance with a difference between the target image and the synthesized image;

a means for generating a converted image corresponding to the target image by assigning, based on the mask image, a region where the potential error is relatively large, information on a corresponding region of the residual image; and

a means for outputting the first reference image, the second reference image and the converted image as information representing the target image, the first reference image and the second reference image.

8. A data structure representing a plurality of images containing mutually similar information, comprising:

a converted image corresponding to a target image contained in the plurality of images; and

a first reference image and a second reference image similar to the target image,

the converted image being obtained by assigning a region of a synthesized image generated based on the first reference image and the second reference image where a potential error with respect to the target image is relatively large, information on a corresponding region of a residual image in accordance with a difference between the target image and the synthesized image.

FIG.1

FIG.2

EP 2 908 531 A1

# FIG.3

(a)

REFERENCE IMAGE (reference) 182
TARGET IMAGE (target) 170
REFERENCE IMAGE (reference) 172
HYBRID IMAGE 190
TIME (FRAME)

(b)

REFERENCE IMAGE (reference) 182
TARGET IMAGE (target) 170-3
TARGET IMAGE (target) 170-2
TARGET IMAGE (target) 170-1
REFERENCE IMAGE (reference) 172
HYBRID IMAGE 190-3
HYBRID IMAGE 190-2
HYBRID IMAGE 190-1
TIME (FRAME)

EP 2 908 531 A1

FIG.4

EP 2 908 531 A1

FIG.5

PROCESSOR 204
MEMORY 206
INPUT UNIT 216
DISPLAY UNIT 218

222

IMAGE DATA 212
DECODING PROGRAM 214
210

PROJECTOR INTERFACE 208

COMMUNICATION INTERFACE 220

202

200

· · · MULTI-VIEW IMAGE

3D DISPLAY DEVICE 300

EP 2 908 531 A1

EP 2 908 531 A1

FIG.6

**ENCODING PROCESS**

S100
ACQUIRE AND STORE A PLURALITY OF IMAGES, AND SET TARGET IMAGE AND REFERENCE IMAGES

S102
GENERATE SYNTHESIZED IMAGE CORRESPONDING TO TARGET IMAGE BASED ON REFERENCE IMAGES

S104
GENERATE MASK IMAGE FROM REFERENCE IMAGES AND DEPTH MAPS

S106
GENERATE RESIDUAL IMAGE FROM TARGET IMAGE AND SYNTHESIZED IMAGE

S108

S1081
GENERATE SIDE INFORMATION BASED ON TARGET IMAGE AND SYNTHESIZED IMAGE

S1082
GENERATE GRADIENT IMAGE FROM SIDE INFORMATION

S1083
CALCULATE REMAINDER AT EACH PIXEL LOCATION FROM GRADIENT IMAGE

S110
GENERATE HYBRID IMAGE FROM MASK IMAGE, RESIDUAL IMAGE AND REMAINDER IMAGE

S112
AT LEAST OUTPUT HYBRID IMAGE AND REFERENCE IMAGES

END

**DECODING PROCESS**

S200
ACQUIRE INFORMATION OUTPUT AS A RESULT OF ENCODING PROCESS

S202
GENERATE SYNTHESIZED IMAGE CORRESPONDING TO TARGET IMAGE BASED ON REFERENCE IMAGES

S204
GENERATE MASK IMAGE FROM REFERENCE IMAGES AND DEPTH MAPS

S206
SEPARATE HYBRID IMAGE INTO RESIDUAL IMAGE REGION AND REMAINDER IMAGE REGION BASED ON MASK IMAGE

S208
RECONSTRUCT CORRESPONDING REGION FROM SYNTHESIZED IMAGE AND RESIDUAL IMAGE REGION

S210

S2101
GENERATE SIDE INFORMATION FROM ACQUIRED INFORMATION

S2102
GENERATE GRADIENT IMAGE FROM SIDE INFORMATION

S2103
DETERMINE INTENSITY VALUE AT EACH PIXEL LOCATION FROM SIDE INFORMATION, GRADIENT IMAGE AND REMAINDER IMAGE

S212
COMBINE RECONSTRUCTED REGION CORRESPONDING TO RESIDUAL IMAGE AND RECONSTRUCTED REGION CORRESPONDING TO REMAINDER IMAGE TO RECONSTRUCT TARGET IMAGE

S214
OUTPUT RECONSTRUCTED TARGET IMAGE AND REFERENCE IMAGES

END

FIG.7

EP 2 908 531 A1

FIG.8

FIG.9

Left reference
(view & depth)

Left reference
(view & depth)

184 — DL | VL —182    170 — VT    172 — VR | DR —174

183 — VL'    VR' —173

185 — eL    eR —175

Threshold    Threshold

184 — DL | mL —187    177 — mR | DR —174

179 — mTR

AND

mTL —189

MSK —180    Filtering(Option)

FIG.10

VL/DL 182

VT (mask) 180

VR/DR 172

184

174

EP 2 908 531 A1

FIG.11

FIG.12

VL/DL  182

VT (residual)  186

VR/DR  172

184

174

FIG.13

FIG.13

SIDE INFORMATION SELECTION UNIT — 1641

GRADIENT IMAGE GENERATION UNIT — 1642

FACTOR SELECTION UNIT — 1643

LOOKUP TABLE — 1644

MODULO OPERATION UNIT — 1645

VT(virtual) — 176

VT — 170

VT(sub-sampled) — 178

VT (side information) — 192

VT (gradient) — 196

$VT = q \times D + Remainder$

VT

D

VT(remainder) — 188

164

## FIG.14

VT(sub-sampled)

up-sampling

~198

~176

178

ERROR
DISTRIBUTION(R)

VT(virtual)

FIG.15

EP 2 908 531 A1

1644

(a)

| Gradient Range | 0 | 1 | 2-3 | 4-7 | 8-15 | 16-31 | 32-63 | 64-127 | 128-255 |
|---|---|---|---|---|---|---|---|---|---|
| D | 1 | 2 | 4 | 8 | 16 | 32 | 64 | 128 | 256 |

1644

(b)

| Gradient Range | 0-7 | 8-127 | 128-255 |
|---|---|---|---|
| D | 8 | 128 | 256 |

FIG.16

VR  172

VT(remainder)  188

VL  182

FIG.17

VT (residual) 186

VT (remainder) 188

VT (mask) 180

VT (hybird) 190

EP 2 908 531 A1

FIG.18

FIG.19

170

FIG.20

186

FIG.21

188

FIG.22

180

FIG.23

190

FIG.24

FIG.25

EP 2 908 531 A1

FIG.26

286
VT
(residual part)  n bit

n bit to (n+1) bit conv.

286A
VT'
(difference)  (n+1) bit

+  276
VT
(virtual)
n bit
||

182
VL
n bit

287
VT (inverse
residual part)
n bit

172
VR
n bit

# FIG.27

EP 2 908 531 A1

FIG.28

FIG.29

(a)

(b)

**INTERNATIONAL SEARCH REPORT**

| International application No. |
| --- |
| PCT/JP2013/077515 |

| A. CLASSIFICATION OF SUBJECT MATTER |
| --- |
| *H04N19/50*(2014.01)i, *H04N13/02*(2006.01)i |

According to International Patent Classification (IPC) or to both national classification and IPC

| B. FIELDS SEARCHED |
| --- |
| Minimum documentation searched (classification system followed by classification symbols) |
| H04N19/00, H04N13/00-15/00 |

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | Yuta HIGUCHI et al., "N-View N-depth Coding for Free View Generation", IEICE Technical Report, The Institute of Electronics, Information and Communication Engineers, 08 December 2011 (08.12.2011), vol.111, no.349, pages 1 to 6 | 1-7 |
| A | Hisayoshi FURIHATA et al., "Residual Prediction for Free Viewpoint Image Generation", IEICE Technical Report, The Institute of Electronics, Information and Communication Engineers, 21 May 2009 (21.05.2009), vol.109, no.63, pages 199 to 203 | 1-7 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 January, 2014 (06.01.14) | 14 January, 2014 (14.01.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/077515

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-237941 A  (KDDI Corp.),<br>21 October 2010 (21.10.2010),<br>abstract; paragraphs [0018] to [0036]; fig. 1 to 15<br>(Family: none) | 1-7 |
| A | JP 8-331565 A  (Matsushita Electric Industrial Co., Ltd.),<br>13 December 1996 (13.12.1996),<br>abstract; paragraphs [0007], [0009] to [0050]; fig. 1 to 5<br>& US 5768438 A          & EP 0708563 A2 | 1-7 |
| A | JP 4-343576 A  (Matsushita Electric Industrial Co., Ltd.),<br>30 November 1992 (30.11.1992),<br>paragraphs [0009], [0017] to [0109]; fig. 1 to 5<br>& US 5392037 A | 1-7 |
| A | JP 2006-261835 A  (Toshiba Corp.),<br>28 September 2006 (28.09.2006),<br>paragraphs [0033] to [0045]; fig. 2 to 3<br>& US 2006/0222241 A1 | 1-7 |

Form PCT/ISA/210 (continuation of second sheet) (July 2009)

## INTERNATIONAL SEARCH REPORT

International application No.

PCT/JP2013/077515

| Box No. II | Observations where certain claims were found unsearchable (Continuation of item 2 of first sheet) |
|---|---|

This international search report has not been established in respect of certain claims under Article 17(2)(a) for the following reasons:

1. ☒ Claims Nos.: 8
   because they relate to subject matter not required to be searched by this Authority, namely:
   The data structure recited in claim 8 is characterized solely by the description of the data (e.g., post-conversion image, etc.) which is included in the data structure, and is thus interpreted as being a mere presentation of information and does not qualify as "a creation of technical ideas utilizing a law of nature".

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MEHRDAD PANAHPOUR TEHRANI ; TOSHIAKI FUJII ; MASAYUKI TANIMOTO.** The Adaptive Distributed Source Coding of Multi-View Images in Camera Sensor Networks. *IEICE Trans,* 2005, vol. E88-A (10), 2835-2843
- **K. MUELLER ; A. SMOLIC ; K. DIX ; P. MERKLE ; P. KAUFF ; T. WIEGAND.** Reliability-based generation and view synthesis in layered depth video. *Proc. IEEE Intl Conf on MMSP,* October 2008, 34-39
- **M. TANIMOTO ; M. WILDEBOER.** Frameworks for FTV coding. *Proc. PCS,* May 2009, 1-4
- **R. SZELISKI ; R. ZABIH ; D. SCHARSTEIN ; O. VEKSLER ; V. KOLMOGOROV ; A. AGARWALA ; M. TAPPEN ; C. ROTHER.** A comparative study of energy minimization methods for Markov random fields with smoothness-based priors. *IEEE Trans. Pattern Anal. Machine Intell.,* 2008, vol. 30 (6), 1068-1080
- **Y. BOYKOV ; O. VEKSLER ; R. ZABIH.** Fast approximate energy minimization via graph cuts. *IEEE Trans. Pattern Anal. Machine Intell.,* November 2001, vol. 23, 1222-1239
- **Y. MORI ; N. FUKUSHIMA ; T. YENDO ; T. FUJII ; M. TANIMOTO.** View generation with 3D warping using depth information for FTV. *Signal Process.: Image Commun.,* January 2009, vol. 24, 65-72
- **L. YANG ; T. YENDO ; M. PANAHPOUR TEHRANI ; T. FUJII ; M. TANIMOTO.** Probabilistic reliability based view synthesis for FTV. *Proc. ICIP,* September 2010, 1785-1788
- **N. FUKUSHIMA ; T. FUJII ; Y. ISHIBASHI ; T. YENDO ; M. TANIMOTO.** Real-time free viewpoint image rendering by using fast multi-pass dynamic programming. *Proc. 3DTV-CON,* June 2010
- **A. SMOLIC ; P. KAUFF ; S. KNORR ; A. HORNUNG ; M. KUNTER ; M. MULLER ; M. LANG.** Three-Dimensional Video Postproduction and Processing. *Proc. IEEE,* April 2011, vol. 99 (4), 607-625
- **Y. MORI ; N. FUKUSHIMA ; T. FUJII ; M. TANIMOTO.** View generation with 3D warping using depth information for FTV. *Image Communication,* 2009, vol. 24 (1-2